# EUROPÄISCHE PATENTSCHRIFT

(11) **EP 1 593 088 B1**
(45) Veröffentlichungstag und Bekanntmachung des Hinweises auf die Patenterteilung: **26.09.2007**
(21) Anmeldenummer: 04707916.5
(22) Anmeldetag: 04.02.2004
(51) Int. Cl.: G06K 17/00, G07F 7/08, G06K 19/14, G06Q 10/00

(54) **PRODUKTSICHERUNGSSYSTEM UND VERFAHREN HIERFÜR**
PRODUCT SECURITY SYSTEM AND METHOD THEREFOR
SYSTEME DE GARANTIE DE PRODUIT ET PROCEDE ASSOCIE

(30) Priorität: 04.02.2003 DE 10305430
(43) Veröffentlichungstag der Anmeldung: 09.11.2005
(73) Patentinhaber: Heinicke, Dietrich, 10178 Berlin (DE); Seiffert, Frank, 13156 Berlin (DE); Lottmann, Burkhard, 12107 Berlin (DE); Hicke, Christian, 14513 Teltow (DE)
(72) Erfinder: HEINICKE, Dietrich, 10178 Berlin (DE); SEIFFERT, Frank, 13156 Berlin (DE); LOTTMANN, Burkhard, 12107 Berlin (DE); HICKE, Christian, 14513 Teltow (DE); SCHACHINGER, Rupert, 10115 Berlin (DE)
(74) Vertreter: Pfenning, Meinig & Partner GbR
(86) Internationale Anmeldenummer: PCT/EP2004/001002
(87) Internationale Veröffentlichungsnummer: WO 2004/070682

(56) Entgegenhaltungen:
- EP-A- 0 889 448
- WO-A-00/23954
- WO-A-01/95249
- US-B1- 6 442 276

## Beschreibung

Die vorliegende Erfindung betrifft ein Produktsicherungssystem sowie ein Verfahren, um die Authentizität von verpackten oder unverpackten bzw. mit einem Beipack oder Anhänger versehenen Produkten oder deren Hersteller bzw. Vertreiber zu überprüfen und zu gewährleisten. Derartige Produktsicherungssysteme und Verfahren werden für pharmazeutische Produkte und Medikamente sowie für Markenware jeglicher Art und dergleichen benötigt. Insbesondere sind derartige Produktsicherungssysteme erforderlich, wenn von möglichen Nachahmungspräparaten oder nachgeahmten Gegenständen eine Gefahr für den Benutzer oder die Öffentlichkeit ausgehen würde.

Die zunehmenden Fälschungen von Produkten, beispielsweise pharmazeutischen Produkten und Medikamenten, verursachen weltweit riesige Schäden für die Betroffenen, insbesondere für die Hersteller, Vertreiber und Endabnehmer der Originalprodukte. Im Falle von pharmazeutischen Produkten betrifft dies vor allem die Pharmaindustrie, die Krankenkassen, Ärzte, Apotheken und insbesondere die Verbraucher. Dann als nachgeahmte pharmazeutische Produkte kommen oftmals wirkungslose oder sogar schädliche Substanzen mit originalgetreu kopierten Verpackungen in den Handel. Eine Überprüfung der Authentizität des Produktes bzw. des Herstellers oder Vertreibers ist beim Apotheker, dem letzten Glied der Verteilungskette, meist nicht möglich.

Die WO 00/23954 offenbart ein Produktsicherungssystem, bei dem auf ein Produkt sowohl offensichtliche Daten als auch ein Sicherungscode aufgebracht wird. Der Sicherungscode wird mittels eines Verschlüsselungsverfahrens aus den öffentlichen Daten erzeugt. Zur Authentifizierung des Produkts wird nun an eine zentrale Stelle die öffentlichen Daten gegeben. Diese erzeugt mittels desselben Verschlüsselungssystems erneut den Sicherheitscode und vergleicht ihn mit dem ebenfalls eingegebenen, auf dem Produkt aufgedruckten Sicherheitscode. Bei Übereinstimmung wird von einem authentischen Produkt ausgegangen.

Die WO 01/95249 A2 offenbart ebenfalls ein Produktsicherungssystem. Bei diesem Authentifizierungssystem wird ein maschinenlesbarer Code auf dem Produkt aufgebracht. Um die Fälschungssicherheit zu gewährleisten, kann dieser Code innerhalb einer Markierung angebracht werden, die bei jeder Manipulation zerstört wird.

Die EP 0 889 448 A2 offenbart ebenfalls ein Sicherungssystem für Produkte. Auch bei diesem Sicherungssystem wird eine Information bezüglich des Produkts als auch ein digitales Siegel auf dem Produkt aufgebracht.

Die US 6,442,276 B1 offenbart ein Verfahren zur Verifikation der Authentizität eines Produkts. Hierzu wird zuerst eine Vielzahl von Zufallszahlen erzeugt und in einer Datenbank gespeichert. Auf jedes der Produkte wird dann eine derartige Zufallszahl aufgebracht, so dass zu jedem einzelnen Produkt eine eigene Zufallszahl gehört.

Auf diese Weise ist jedes einzelne Produkt eindeutig identifizier- und verifizierbar.

Die vorliegende Erfindung stellt sich hier nun die Aufgabe, ein Produktsicherungssystem und ein Verfahren zur Verfügung zu stellen, mit denen die Nachahmung von Originalprodukten erkannt und so Fälschungen von Originalprodukten unterschieden werden können, welche gleichzeitig wenig Platz auf dem Produkt beanspruchen, vom Anwender leicht zu handhaben sind und welche auf Seiten der zentralen Authentifizierungsstelle gegen unbefugte Zugriffe gesichert sind.

Diese Aufgabe wird durch das Produktsicherungssystem nach Anspruch 1, das Verfahren nach Anspruch 17, das Produkt nach Anspruch 38 bzw. eine Produktverpackung nach Anspruch 46 gelöst. Vorteilhafte Weiterbildungen des erfindungsgemäßen Produktsicherungssystems, des Verfahrens, des Produktes oder der Verpackung werden in den jeweiligen abhängigen Ansprüchen gegeben.

Kern der vorliegenden Erfindung ist es, dass der Hersteller bzw. wenn der Hersteller über einen mit ihm verbundenen Vertrieb das Produkt in den Handel bringt, der Vertrieb oder Verteiler, in besonderer Weise die einzelne Verpackung oder das einzelne Produkt kennzeichnet. Hierzu wird jeder einzelnen Verpackung bzw. jedem einzelnen Produkt ein Produktidentifizierer zugeordnet, die die eindeutige Identifizierung jedes einzelnen Produktes bzw. Verpackung des Herstellers, Vertreibers oder Verteilers eindeutig ermöglicht. Unter dem Begriff "Produkt" wird hier wie im folgenden eine Produktserie, gemeinhin mit einer Artikelnummer versehen, die kleinstmögliche Verpackungs- oder Vertriebseinheit oder auch jede beliebe Verpackungs- oder Vertriebsgröße mit beliebigem Inhalt verstanden. Als Produkt wird also jede im Vertrieb auf beliebiger jeweiliger Vertriebsstufe verwendete Einheit oder Vielfache hiervon bis hin zu ganzen Produktserien verstanden.

Zu dem Produktidentifizierer wird nun mindestens ein digitales Siegel bereitgestellt, das dem Produktidentifizierer eindeutig, vorteilhafterweise eineindeutig zugeordnet ist. Dabei kann es sich beispielsweise um den symmetrisch oder asymmetrisch verschlüsselten Produktidentifizierer oder auch um einen Nachrichtenauthentifizierungscode (Message Authentication Code, MAC) handeln. Letzterer kann durch Anwendung einer Hash-Funktion auf den Produktidentifizierer erzeugt werden.

Unter einem "Digitalen Siegel" sollen im folgenden alle in digitaler Form darstellbaren Informationen verstanden werden, die manuell und/oder maschinell lesbar sind und einem Produkt nach dem hier beschriebenen Verfahren zusätzlich zu der bereits vorhandenen Produktkennzeichnung zugeordnet sind mit dem Ziel, die Authentizität des Produktes mit Hilfe einer Datenbank des Herstellers zu überprüfen.

Im Falle einer symmetrischen oder asymmetrischen Verschlüsselung des Produktidentifizierers besorgt sich der Hersteller, unter diesem Begriff sollen im Folgenden auch mögliche Vertreiber oder Verteiler subsumiert werden, die ein solches System für die von ihnen hergestellten oder vertriebenen Waren bzw. Produkte verwenden wollen, mindestens einen - geheimen bzw. privaten - Schlüssel für die symmetrische Verschlüsselung oder mindestens ein Zertifikat bestehend aus einem Schlüsselpaar aus privatem Schlüssel und öffentlichem Schlüssel für die asymmetrische Verschlüsselung. Für verschiedene Artikel, Produkte, Hersteller etc. können dabei derselbe Schlüssel oder dasselbe Zertifikat oder auch verschiedene Schlüssel oder Zertifikate verwendet werden. Der Produktidentifizierer wird nun mit dem jeweiligen privaten Schlüssel verschlüsselt und unmittelbar dem zu kennzeichnenden Produkt zugeordnet.

Das digitale Siegel kann dann beispielsweise zumindest teilweise auf die Verpackung oder an, auf oder in das Produkt selbst oder auch auf einen Beipackzettel oder einen Anhänger an das Produkt, beispielsweise einen Annäher oder Aufkleber, aufgebracht werden. Hier wie im Folgenden sollen alle derartigen, im Zusammenhang mit der Verpackung oder auch Ausschmückung von Produkten verwendeten Elemente unter dem Begriff "Verpackung" verstanden werden. Die An- oder Aufbringung des digitalen Siegels, gegebenenfalls weiterer digitaler Siegel oder des Produktidentifizierers, oder Teile hiervon, erfolgt dabei vorteilhafterweise derart, dass diese ohne das Produkt oder die Packung zu öffnen von außen lesbar sind, d.h. auf einem zugänglichen Teil des Produkts, des Anhängers, Annähers, der Verpackung oder sonstigen geeigneten Elemente.

Bei Verwendung eines 2048-Bit Schlüssels, der bei asymmetrischen Verschlüsselungsverfahren als sicher gilt, entsteht bei der Verschlüsselung des Produktidentifizierers ein verschlüsseltes Wort mit einer Länge von 256 Zeichen. Sinnvoll ist es, wenn das digitale Siegel maschinenlesbar ist, beispielsweise als Balkencode, auf einem Magnetstreifen oder einem integrierten aktiven oder passiven Mikrochip.

Erfindungsgemäß wird nur ein bestimmter Teil des digitalen Siegels, beispielsweise die ersten oder letzten 10 Ziffern oder 10 Ziffern aus der Mitte, aufgebracht. Wird sichergestellt, dass keine mögliche Zeichenkombination der aufgebrachten Zeichen doppelt vorkommt, so ist das einzelne Produkt eineindeutig identifizierbar. Dies kann erfolgen, indem alle Produktidentifizierer und/oder digitale Siegel, die eine verschlüsselte aufzubringende Ziffernfolge ergeben, die bereits bei einem vorigen Produktidentifizierer und/oder digitalen Siegel entstanden ist, nicht verwendet werden oder indem auf dem Produkt oder der Verpackung ein weiteres Kriterium zur Unterscheidung identischer aufgebrachter Abschnitte des digitalen Siegels aufgebracht und auch im Registrierungsserver gespeichert wird. Nach Eingabe der Ziffernfolge in die Datenbank des Registrierungsservers kann dieser anhand des eingegebenen Teils A des digitalen Siegels diesem einen Datensatz zuordnen und den Rest des digitalen Siegels dann aus einer dort angelegten Datenbank selbst ergänzen. Dies gilt auch im Falle der symmetrischen Verschlüsselung mit einem geheimen (privaten) Schlüssel oder Nutzung von Hash-Werten oder MAC.

Optional ist auf der Verpackung oder dem Produkt zusätzlich ein weiterer Produktidentifizierer im Klartext aufgebracht, der eine einzelne Verpackung oder ein einzelnes Produkt bzw. eine bestimmte Anzahl von Produkten oder Verpackungen, beispielsweise auch eine ganze Produktserie, zugeordnet ist. Wird dieser Produktidentifizierer und der aufgebrachte Teil des digitalen Siegels in den Registrierungsserver eingegeben, so identifiziert dieser anhand der Eingabe entweder nur der eingegebenen weiteren Produktidentifizierung oder aus der Kombination von weiteren Produktidentifizierern und eingegebenen Teil des digitalen Siegels das einzelne Produkt bzw. die einzelne Verpackung eineindeutig und kann aus einer Datenbank den Rest des digitalen Siegels ergänzen.

Weiterhin kann im Falle der asymmetrischen Verschlüsselung in gleicher Weise das Produkt zusätzlich mit dem öffentlichen Schlüssel bzw. einem Verweis, wie bzw. wo der öffentliche Schlüssel erhalten werden kann, gekennzeichnet werden. Letztere Möglichkeit ist vor allem bei einem langen Schlüssel, beispielsweise einem 2048-Bit-Schlüssel vorteilhaft, da dieser für eine manuelle Übertragung in der Praxis zu lang ist.

Neben dem Aufdrucken können auch alle weiteren Möglichkeiten zum Aufbringen der Angaben auf dem Produkt oder seiner Verpackung verwendet werden, beispielsweise das Aufkleben einer entsprechend markierten Folie bzw. Mikrochips etc. Es ist dabei nur wichtig, dass die jeweilige Angabe, beispielsweise maschinell oder durch einen Menschen, erkennbar, beispielsweise lesbar ist.

Es ist so zwar für Jedermann möglich, im Falle der asymmetrischen Verschlüsselung gegebenenfalls aus dem digitalen Siegel den Produktidentifizierer im Klartext zu erhalten, beispielsweise eine Seriennummer. Seriennummern können dabei auch fortlaufend sein, so dass möglicherweise durchaus auch noch Jedermann aus einer so ermittelten Seriennummer auf die Seriennummer einer weiteren Produktverpackung oder eines weiteren Produktes schließen könnte.

Da jedoch der private Schlüssel nicht zur Verfügung steht, ist es unmöglich, das richtige digitale Siegel eines weiteren Produktes oder einer weiteren Verpackung zu ermitteln und dieses auf einem nachgeahmten Produkt oder einer nachgeahmten Verpackung aufzubringen. Er wird also mit der ermittelten Seriennummer der von ihm analysierten Verpackung nichts weiter anfangen können.

Im Falle der symmetrischen Verschlüsselung bleibt der (private) Schlüssel geheim und wird lediglich vom Registrierungsserver bzw. der Datenbank zur Verifizierung verwendet.

Es ist nun natürlich möglich, dass ein Nachahmer daran denkt, die Verpackung identisch zu reproduzieren, d.h. mit dem originalen verschlüsselten Produktidentifizierer und gegebenenfalls dem öffentlichen Schlüssel, die auf der von ihm gekauften Originalpackung aufgedruckt waren. Der Verkauf einer derartigen Nachahmung wird nun verhindert, indem Endverkäufer oder Endverteiler wie Arztpraxen oder Ambulanzen des Produktes veranlasst werden, sich bei einer Datenbank anzumelden, beispielsweise in einem Registrierungsserver, in dem sämtliche zugelassenen Seriennummern bzw. Produktidentifizierer registriert sind. In diesen gibt der Endverkäufer über online- oder offline-Verbindungen oder andere Kommunikationsmittel das digitale Siegel und gegebenenfalls den weiteren Identifizierer ein sowie die Information, ob das Produkt mit dem entsprechenden Produktidentifizierer nunmehr an Endabnehmer verkauft wurde. Der beispielsweise vom Server entschlüsselte Produktidentifizierer wird dann in der Datenbank als verkauft markiert.

Sollte jedoch bereits ein Produkt mit diesem Produktidentifizierer verkauft worden sein, so kann dies also der Endverkäufer unmittelbar aus dieser Datenbank entnehmen oder er wird, beispielsweise über eine elektronische Nachricht (e-mail) informiert, so dass er weiß, dass zu der ihm vorliegenden Packung bzw. Produkt nachgeahmte Packungen bzw. Produkte im Umlauf sind bzw. er unter Umständen eine nachgeahmte Packung bzw. Produkt in den Händen hält. Er wird daher den Verkauf dieser Packung bzw. Produktes unterlassen, da angezweifelt werden muss, dass es sich um eine Originalverpackung bzw. ein Originalprodukt handelt.

Kern der vorliegenden Erfindung ist es also, dass zum einen eine Datenbank zur Verfügung gestellt wird, in der einzelne Produkte oder Produktverpackungen als verkauft markiert werden können bzw. durch jeden mit eigenen Mitteln in der gesamten Verteilungskette überprüft werden kann, ob eine nachgeahmte Packung oder Produkt im Umlauf ist und bereits verkauft wurde.

Andererseits bietet die vorliegende Erfindung die Möglichkeit, Zusatzinformationen wie Verteilrouten von Produkten oder ähnliches abzuspeichern.

Unter dem Aspekt der Produktprüfung enthält eine Produktdatenbank in einem Registrierungsserver unter anderem folgende Daten:
- Den eindeutigen Indentifizierer (id) eines Produktes
- Das ihm zugeordnete digitale Siegel (Sig) bzw. einen Teil davon (Sig2)
- Mindestens ein "Markierungsfeld"

Bei der Prüfung durch einen Händler kann eine Änderung dieses Markierungsfeldes erfolgen. Nach erfolgreicher Verifikation des digitalen Siegels wird dieses Markierungsfeld auf einen bestimmten Wert gesetzt (beispielsweise wird hier eine Identifikationsnummer des Prüfers eingetragen), der als "Produkt wurde vom identifizierten Prüfer mit der eingetragenen Nummer erfolgreich geprüft" interpretiert werden kann.

Die Markierung der Datensätze in der Produktdatenbank ist wesentlich für die optimierte Funktionsweise des Systems. Sie verhindert nämlich, dass ein Fälscher ein valides Siegel von einem "echten" Produkt einfach kopiert und auf dem Produkt anbringt. Ohne eine entsprechende zentrale Markierung würde dann jedes valide Siegel - also auch solche, die von Fälschern einfach kopiert werden - als "echt" gewertet werden.

Für die Markierungsstrategie stehen mehrere Möglichkeiten zur Verfügung, die die folgenden Rahmenbedingungen beachten müssen:
a) Nicht jedes Glied in der Verteilkette (z.B. Zwischenhändler) wird die Produkdatenbank nutzen. Es werden also "Lücken" in den durch Produkdatenbank registrierten Verteilrouten auftreten. Dies darf die Funktionsfähigkeit nicht grundsätzlich beeinträchtigen.
b) Der Prüfprozess darf für einen Händler keinen erheblichen Mehraufwand bedeuten.
c) Fehlerhafte Bedienung des Systems durch ein Glied in der Verteilkette darf keine grundsätzlichen Auswirkungen auf den Prüfmechanismus haben.

Grundsätzlich stehen mehrere Möglichkeiten zur Verfügung, die Methode der Produktmarkierung in der Produktdatenbank des Herstellers zu realisieren. Im folgenden werden zwei von vielen verschiedenen Möglichkeiten beschrieben, die zusätzlich eine Verfolgung des Vertriebsweges jedes Produktes ermöglichen.

Für alle im Folgenden beschriebenen Varianten der Datensatzmarkierung bezieht sich die Bezeichnung "Verteilkette" lediglich auf die Produktweitergabe zwischen Händlern. Bei Verkauf eines Produktes an einen Endverbraucher wird in Bezug auf das vorliegende System kein "Warenausgang" registriert. Das bedeutet, dass jede gesetzte Datensatzmarkierung bei Verkauf eines Produktes an einen Endverbraucher bestehen bleibt. Die verwendeten Begriffe "Wareneingang" und "warenausgang" sind also intuitiv zu verstehen.

### a) Temporäres Aufheben von Datensatzmarkierungen

Würde das Glied in der Verteilkette, das den Prüfprozess durchführt - und ja implizit den entsprechenden Datensatz in der Produktdatenbank markiert - die gesetzte Markierung auch bei einem Warenausgang (bei Weitergabe an einen anderen Händler oder Zwischenhändler) ohne weitere Maßnahme bestehen lassen, würde eine valide Signatur durch einen folgenden Prüfprozess als Fälschung gewertet werden. Ein Großhändler führt beispielsweise eine Produktprüfung durch und markiert in der Produzentendatenbank den entsprechenden Datensatz. Dann beliefert er einen Zwischenhändler, der seinerseits wieder eine Produktprüfung durchführt. Würde der Datensatz nach wie vor eine Markierung enthalten, würde das tatsächlich echte Produkt bei der neuerlichen Prüfung durch den Zwischenhändler als Fälschung erkannt werden.

Auf der anderen Seite würde ein "Aufheben" der Markierung bei einem Warenausgang zu folgendem Problem führen: Würde ein Händler (bzw. Zwischenhändler oder Großhändler) bei Warenausgang die in der Produktdatenbank gesetzte Markierung wieder aufheben, so könnte ein Fälscher während des folgenden Verteilprozesses ein gefälschtes Produkt (mit validem Siegel) in die Verteilkette "einschleusen".

Ein Fälscher muss, um ein gefälschtes Produkt (in diesem Fall müsste die Fälschung dasselbe digitale Siegel wie das weitergegebene echte Produkt haben) in die Verteilkette einzuschleusen, genau jene Zeitspanne wählen, wo der entsprechende Datensatz in der Produktdatenbank ausmarkiert ist. Er verfügt im Allgemeinen über keine Informationen darüber, wann ein bestimmtes Produkt mit einer bestimmten Signatur von wem an wen weitergegeben wird, so dass dieser Fall durchaus unwahrscheinlich.ist, jedoch kann er nicht ausgeschlossen werden. Vor allem erhöht sich die Wahrscheinlichkeit, dass der Fälscher eine Fälschung in die Verteilkette einschleust umso mehr, je weniger Zwischenhändler von der Produktprüfung tatsächlich Gebrauch machen (und damit keine Datensatzmarkierung durchführen) .

Zusammenfassend ergibt diese Methode folgende Vor- und Nachteile:
- Das System arbeitet unter Verfahren dieser Methode auch, falls nicht alle Instanzen der Verteilkette eine Produktprüfung durchführen.
- Verhalten bei fehlerhafter Anwendung: Wird bei Warenausgang die Datensatzmarkierung nicht aufgehoben (der Händler "vergisst", den Warenausgang im System zu registrieren), so wird das Produkt bei Prüfung durch die empfangene Instanz fälschlicherweise als Fälschung erkannt. Das System ist also in seiner Grundfunktion abhängig von der korrekten Anwendungen.
- Möglicherweise wird durch diese Methode keine ausreichende Sicherheit gewährleistet.

### b) Qualifiziertes Markieren von Datensätzen

Auch bei diesem Ansatz wird zwischen Wareneingang und Warenausgang eines Produktes unterschieden. Allerdings wird die Datensatzmarkierung bei Warenausgang nicht aufgehoben,' sondern "qualifiziert". Diese Methode gewährleistet maximale Sicherheit. Dabei wird als "Absender" der Händler oder Zwischenhändler bezeichnet, der ein Produkt an einen anderen weitergibt, als Empfänger wird der das Produkt empfangende Händler (oder Zwischenhändler) bezeichnet.

Ausgehend von der Tatsache, dass ein Händler nach erfolgter Produktprüfung den entsprechenden Datensatz in der Produktdatenbank markiert hat, will er ein Produkt an einen bestimmten Empfänger versenden. Als Markierung wurde eine eindeutige Identifikationsnummer des Händlers gewählt. Der Absender meldet sich (dieser Vorgang kann durch das Warenwirtschaftssystem des Händlers ebenfalls automatisiert werden) wiederum bei der Datenbank an und modifiziert die gesetzte Markierung. Die neue Markierung entspricht der entsprechenden Identifikationsnummer des Empfängers.

Der Empfänger führt nun seinerseits bei Wareneingang eine Produktprüfung durch. Unter Berücksichtigung der aktuellen Datensatzmarkierung würde der Prüfungsprozess wie folgt modifiziert sein: Ein Produkt wird genau dann als echt gewertet, wenn die aktuelle Datensatzmarkierung des zu prüfenden Produktes übereinstimmt mit der Identifikationsnummer der prüfenden Instanz.

Diese Methode birgt im Gegensatz zu der vorstehend beschriebenen Methode offensichtlich keine Sicherheitsprobleme. Insgesamt lassen sich die Vor- und Nachteile dieser Variante wie folgt zusammenfassen:
- Einem Fälscher wird das Einschleusen von Fälschungen in die Verteilerkette praktisch unmöglich gemacht.
- Die Anwendung dieser Methode setzt unbedingt voraus, dass jedes Glied der Verteilkette eine Produktprüfung auch tatsächlich durchführt. Falls eine Instanz der Verteilkette keine Produktprüfung vornimmt, werden tatsächlich echte Produkte möglicherweise als Fälschungen gewertet.
- Fehlerhafte Anwendung: Wird bei Warenausgang die Datensatzmarkierung nicht qualifiziert, (der Händler "vergisst", den Warenausgang im System zu registrieren), so wird das echte Produkt bei Prüfung durch die empfangende Instanz fälschlicherweise als Fälschung erkannt. Wie die Methode des "Aufhebens der Markierungen" setzt auch diese Variante eine fehlerfreie Anwendung seitens der Händler voraus.

In der Praxis gibt es im Allgemeinen Restriktionen hinsichtlich der Produktrouten innerhalb der Verteilerkette. Im Allgemeinen sind diese Restriktionen branchenspezifisch.

Denn jedes Produkt durchläuft auf seinem Weg vom Produzenten bis zum Endverbraucher eine bestimmte Route. Üblicherweise wird diese Route linear sein, das heißt, ein Produkt wird normalerweise den Weg ausgehend vom Produzenten über Großhändler, Zwischenhändler, Händler bis zum Endverbraucher finden, also in einer streng hierarchischen Struktur laufen. In der Praxis kommt es allerdings immer wieder vor, dass ein Produkt innerhalb seiner Verteilroute "Schleifen" zieht. Diese sind im Allgemeinen nicht beliebig, sondern unterliegen gewissen Einschränkungen.

Des Weiteren wird bei Verwendung der asymmetrischen Verschlüsselung durch die Verschlüsselung des Produktidentifizierers mit dem privaten Schlüssel verhindert, dass aus der öffentlich möglichen Kenntnis einer Seriennummer auf weitere Seriennummern geschlossen und somit andere Verpackungen oder Produkte bezüglich ihrer verschlüsselten Kennzeichnung nachgeahmt werden können.

Durch die Verfahren zumindest eines Teils einer mit einem privaten Schlüssel oder anders verschlüsselten Seriennummer zur Authentifizierung des Produktes oder der Verpackung kann selbst ein Angriff auf die Datenbank im Registrierungsserver und ein fremder Eingriff in diese erkannt werden, da es ohne Kenntnis des Schlüssels nicht möglich ist wirksam Produktidentifizierer sowohl unverschlüsselt als auch verschlüsselt bzw. dessen zugeordnetes digitales Siegel zu fälschen.

Die Authentifizierung kann dabei entweder so erfolgen, dass der verschlüsselte Produktidentifizierer in der Produktdatenbank bzw. dem Registrierungsserver zuerst entschlüsselt und dann verglichen wird mit einem Datenbankeintrag.

Alternativ kann bei Eingabe des unverschlüsselten Produktidentifizierers in dem Registrierungsserver dieser den gewünschten Datensatz ermitteln, die Verschlüsselung an diesem Datensatz nochmals durchführen und das verschlüsselte Ergebnis mit dem eingegebenen Teil des auf dem Produkt aufgebrachten, bereits zuvor verschlüsselten Produktidentifizierer vergleichen.

Im letzteren Falle eignen sich für die Verschlüsselung nicht nur alle herkömmlichen Verfahren, sondern auch digitale Signaturen wie parametrisierte Hashcodes bzw. Message Authentication Codes (MAC) (z.B. SHA-1-HMAC oder RIPEMD-HMAC), die Verwendung eines geheimen (privaten symmetrischen) Schlüssels.

Der Kontakt mit der Datenbank, beispielsweise des Apothekers mit der Datenbank eines Pharmaherstellers, kann dabei vorteilhafterweise über das Internet hergestellt werden. Eine Abfrage über Telefon, beispielsweise über ein Call-Center, oder sogar auch schriftlich ist auch möglich. Insbesondere in Ländern mit geringer Internet-Infrastruktur, kommt eine Abfrage über Telefon in Frage.

Im Falle der asymmetrischen Verschlüsselung muss der öffentliche Schlüssel nicht auf der Verpackung aufgedruckt sein. Es genügt, wenn der öffentliche Schlüssel dem Server, der die Datenbank bedient, zur Verfügung steht. In diesem Falle gibt der Endverkäufer den ihm bekannten Teil des verschlüsselten Produktidentifizierer an den Server, der diese entschlüsselt und der Klartext-Seriennummer zuordnet. In diesem Falle entspricht das asymmetrische Verschlüsselungsverfahren dem symmetrischen Verschlüsselungsverfahren mit einem geheimen (privaten) Schlüssel, der nur dem Server bekannt ist. Auch jede weitere Art der Zurverfügungstellung des öffentlichen Schlüssels ist denkbar. Entscheidend ist letztlich nur, dass der private Schlüssel geheim bleibt, so dass es einem Nachahmer nicht möglich ist, Produktidentifizierer in korrekter Weise zu verschlüsseln.

Mit dem erfindungsgemäßen Produktsicherungssystem ist es weiterhin auch möglich, die Authentizität des Herstellers des Produktes zu überprüfen, da die Datenbank die Herstellerangaben zur Verfügung stellen kann, wenn bezüglich eines Produktes von einem Endverkäufer oder irgendeinem Dritten angefragt wird. Alternativ können auch bereits bei der Verschlüsselung.der Seriennummer bzw. des Produktidentifizierers weitere Informationen mit in die verschlüsselte Form überführt werden, beispielsweise Informationen zum Produkt, zum Hersteller, zur Verfahren des Produktes, Warn- und Sicherheitshinweise, Herstellungs- und Produktdaten, Herstellungsort oder Verfallsdatum und dergleichen. Steht im Falle der asymmetrischen Verschlüsselung der öffentliche Schlüssel jedem zur Verfügung bzw. weist das Produkt oder die Verpackung einen Verweis auf, mit dem der öffentliche Schlüssel oder andere Informationen zugänglich gemacht werden, so kann jeder unmittelbar an die entsprechenden Informationen gelangen. Dies ist insbesondere interessant für den Endverbraucher, der sich so eigenständig entweder durch Entschlüsselung des verschlüsselten Produktidentifizierers oder durch Anfrage bei dem Server der Datenbank von der Herkunft seines Produktes überzeugen kann.

Selbstverständlich muss das digitale Siegel nicht unbedingt auf der Verpackung im eigentlichen Sinne aufgebracht sein. Es ist auch denkbar, dass sie auf dem Produkt selbst, eines sonstigen Verpackungsbestandteils wie beispielsweise einem Annäher an dieses oder auch auf einem Beipack, beispielsweise einem Beipackzettel bei Arzneimitteln, oder jedem anderen zur Produktpackung gehörenden Element aufgebracht ist.

Das beschriebene Verfahren und das beschriebene Produktsicherungssystem sind besonders einfach zu handhaben, sofern der Verteiler einen Online-Zugang zum Registrierungsserver des Herstellers des Produktes oder einem von diesen beauftragten Institutionen besitzt. Es handelt sich dann vorteilhafterweise um ein webbasiertes Verfahren. Die Authentifizierung des anfragenden Endverteilers gegenüber dem Registrierungsserver kann ähnlich wie im Online-Banking erfolgen, d.h. mittels einer SSL-Verbindung und Anmeldung über einen PIN-Code. Über eine so gesicherte Verbindung kann dann nach Abgabe des Produktes oder vor Abgabe des Produktes durch den Endverteiler online, offline, sofort, zeitnah oder auch später der aufgebrachte Teil das digitale Siegel und gegebenenfalls des weiteren Produktidentifizierers an den Registrierungsserver übermittelt und der Eintrag des Produktidentifizierers in der Datenbank mit einer Markierung, z.B. "verkauft", versehen werden. Damit wird bei weiteren Anfragen mit demselben Produktidentifizierer sofort erkannt, dass nachgeahmte Produkte im Umlauf sind.

Vorteilhaft an dem Verfahren ist es daher, dass die Fälschungssicherheit von Produkten weitestgehend gewährleistet werden kann. Dabei ist der Hersteller nicht an standardisierte Produktidentifizierern oder weiteren Kennungen, z.B. Seriennummern, gebunden, sondern kann ein proprietäres Format verwenden. Eine herstellerübergreifende Standardisierung der Produktidentifizierer oder der weiteren Identifizierer bzw. Kennungen ist nicht erforderlich.

Der genaue Mechanismus der Produktüberprüfung wird ebenfalls dem Hersteller überlassen und kann von diesem gesteuert werden. Bis auf rechtliche Beschränkungen, wie beispielsweise das Verbot von Kryptographie in einigen Ländern, unterliegt der Hersteller keinerlei Einschränkungen und ist nicht an die Absprache mit anderen Herstellern gebunden.

Das erfindungsgemäße Verfahren hat weiterhin den Vorteil, dass aufgrund der Protokollierung des Verkaufs einzelner Produkte oder Verpackungen der Hersteller einen genauen Überblick über die Verteilung seiner Produkte erhält. Dies kann beispielsweise für Marketingstrategien genutzt werden.

Es ist selbstverständlich, dass das erfindungsgemäße Produktsicherungssystem bzw. Produktsicherungsverfahren bzw. geeignet gestaltete Produkte oder Produktverpackungen (einschließlich Anhänger, Annäher, Aufkleber, Beipackzettel etc.) die Nachahmung nahezu jeglichen Produktes behindern oder verhindern kann. Besonders interessant ist die vorliegende Erfindung selbstverständlich in den Bereichen, wo sicherheitsrelevante Aspekte eines Produktes eine große Rolle spielen, beispielsweise beim Verkauf von Arzneimitteln, Fahrzeugteile, Luftfahrzeugteile oder Lebensmitteln, beispielsweise Kinder- oder Babynahrung oder Schlachtvieh (z.B. Rinder). Auch für hochpreisige Produkte oder Markenware ist das vorliegende erfindungsgemäße System besonders sinnvoll einzusetzen, beispielsweise für Fahrzeuge, Ersatzteile, Zulieferteile, Halbzeuge und Fertigwaren allgemein, Software, Kleidungsstücke, Schmuck, Uhren und der-Kleidungsstücke, Schmuck, Uhren und dergleichen.

Im Folgenden wird nun ein Beispiel für ein erfindungsgemäßes Produktsicherungssystem gegeben, wobei
- Fig. 1: ein erfindungsgemäßes Gesamtsystem und
- Fig. 2: den Aufbau einer Datenbank in einem Registrierungsserver sowie den zugehörigen Aufdruck auf einer Produktverpackung zeigen.

Fig. i zeigt dabei beispielhaft ein Medikamentensicherungssystem 1 mit einem Registrationsserver 2, der über eine Leitung 10, beispielsweise eine Telefonleitung, mit einem Netzwerk 3, beispielsweise dem Internet, verbunden ist. Mit dem Internet 3 sind Computer 4a, 4b, 4c über Leitungen 11a, 11b, 11c verbunden, die in Apotheken stationiert sind. Auch der Computer 4d ist in einer Apotheke stationiert, jedoch über eine direkte Leitung, beispielsweise eine bedarfsweise aufgebaute Telefonverbindung 13b mit dem Datenbankserver 2 verbunden. Die Bezugszeichen 5a bis 5e bezeichnen Endverbraucher, die entweder über Internetanschlüsse 12a bis 12d mit dem Internet 3 verbunden sind bzw. im Falle des Endverbrauchers 5e über eine Telefonleitung, über die fallweise eine Verbindung 13a aufgebaut wird, direkt oder indirekt mit dem Registrierungsserver 2 verbunden.

Damit haben sowohl die in Apotheken installierten Server 4a bis 4d als auch die Endverbraucher 5a bis 5e Zugriff auf die in dem Registrierungsserver 2 vorhandene Datenbank mit den Produktidentifiziereren eines Medikamentenherstellers. Dasselbe System ist jedoch anstelle eines Medikamentenherstellers auch durch einen Medikamentenvertrieb, beispielsweise einen Großhandel realisierbar.

Bei dem vorliegenden Beispiel gehören zu jedem Arzneimittel produkt- und herstellerspezifische Daten, die auf der Verpackung oder einem Beipack vollständig oder auch nur teilweise angegeben sind. Zur Verifizierung der Herkunft des Produktes bzw. der Authentizität des Herstellers werden nun vom Arzneimittelproduzenten und den Apotheken folgenden Vorkehrungen getroffen:
1. Der Arzneimittelhersteller fordert - z.B. von einer Behörde oder einer international anerkannten Zertifizierungsstelle/Trustcenter - ein sogenanntes Zertifikat an. Dieses Zertifikat beinhaltet unter anderem das für ein asymmetrisches kryptologisches Verfahren erforderliche Schlüsselpaar aus privatem und öffentlichem Schlüssel.

Vom Arzneimittelhersteller oder einer von ihm beauftragten Institution wird ein Registrierungsserver 2 eingerichtet, der über einen Internetzugang über Leitung 10 und/oder über Zugänge über Telefonleitungen 13a, 13b verfügt. Auf dem Registrierungsserver 2 wird eine Datenbank erstellt, die die oben genannten produkt- und herstellerspezifischen Daten jeder einzelnen Packung bzw. jedes einzelnen Produktes enthält. Dabei sollte für jedes einzelne Produkt, beispielsweise für die kleinste Verpackungseinheit einer Produktserie ein Datensatz existieren, der zumindest eine eindeutig diese kleinste Verpackungseinheit identifizierende Seriennummer oder produktspezifische Kennung enthält. Diese stellen einen Produktidentifizierer dar und erlauben eine eindeutige Zuordnung aller Elemente einer Arzneimittel-Produktserie.

Dieser Produktidentifizierer wird nun mit dem genannten privaten Schlüssel verschlüsselt und dieser verschlüsselte Produktidentifizierer als digitales Siegel im vorliegenden Beispiel als Balkencode (Barcode) und/oder.Ziffernfolge auf der Verpackung des jeweiligen Arzneimittels oder seinem Beipack aufgebracht, beispielsweise aufgedruckt. Es ist dabei unschädlich, wenn auch der unverschlüsselte Produktidentifizierer und/oder der öffentliche Schlüssel auf dem Produkt, der Verpackung oder dem Beipack aufgebracht werden. Statt einem Aufdruck kann auch eine bedruckte Klebefolie auf das Produkt oder dessen Verpackung aufgebracht werden.

Wird nun durch eine der Apotheken 4a bis 4d sofort bzw. zeitnah, notfalls auch offline, ein Arzneimittel an einen Endabnehmer 5a bis 5e abgegeben, so stellt die Apotheke 4a bis 4d eine Verbindung über das Internet 3 oder über die Leitung 13b mit dem Registrationsserver 2 her. Nun gibt die Apotheke den verschlüssselten Produktidentifizierer an den Server 2. Daraufhin wird von dem Server 2 der verschlüsselte Produktidentifizierer mit dem ihm ebenfalls bekannten oder mitgeteilten öffentlichen Schlüssel entschlüsselt und überprüft, ob der in der Datenbank gespeicherte entsprechende Produktidentifizierer bereits als verkauft bzw. an einen Endkunden abgegeben markiert ist oder nicht. Wenn sie nicht markiert ist, so wird dies der jeweiligen Apotheke mitgeteilt, so dass diese guten Gewissens das Produkt an den Endabnehmer abgeben kann. Ist diese bereits als verkauft markiert, so wird dies ebenfalls der Apotheke mitgeteilt, die nunmehr weiß, dass offensichtlich nachgeahmte identische Kopien der Arzneimittelverpackung bzw. des Arzneimittels im Umlauf sind. Sie kann daher die von ihr zu verkaufende Verpackung bzw. das von ihr zu verkaufende Arzneimittel einbehalten und beispielsweise dem Hersteller übergeben. Durch die Markierung eines Elementes in der Datenbank wird also verhindert, dass sich ein Fälscher die Daten eines einzelnen Elementes aus einer Produktserie beschafft und in beliebig vielen Kopien sein Produkt auf den Markt bringt. Mit dem öffentlichen Schlüssel, der allen Beteiligten in der Verteilerkette bis zum Verbraucher zur Verfügung gestellt und auch auf der Verpackung aufgebracht werden kann, ist eine Verifizierung und Überprüfung der Authentizität des Produktes bzw. des Herstellers möglich.

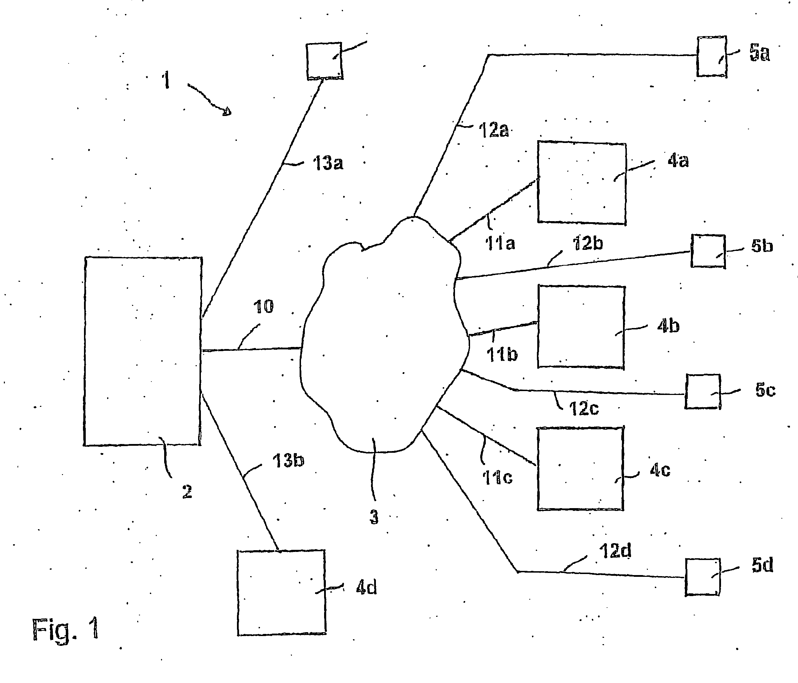

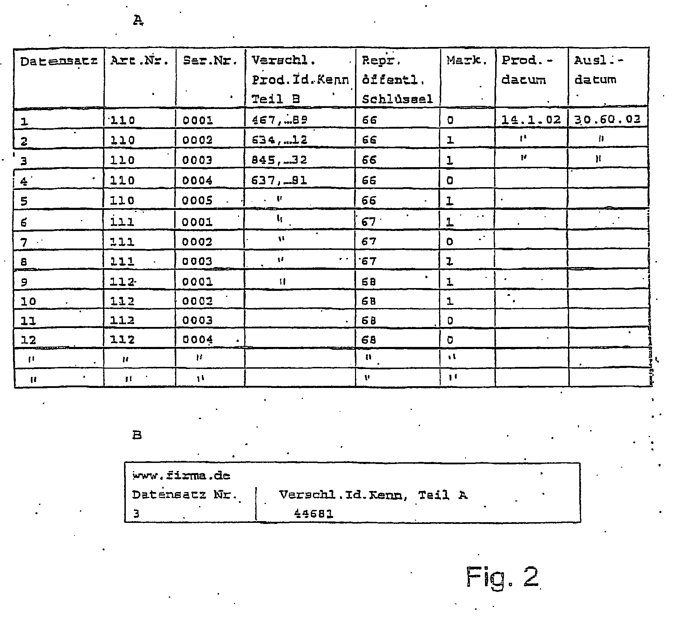

Fig. 2A zeigt den Aufbau eines Produktsicherungssystemes sowie der zugehörigen Datenbank in dem Registrierungsserver. In dem Beispiel der Fig. 2 wird im Unterschied zu Fig. 1 nur ein Teil des verschlüsselten Produktidentifizierers auf dem Produkt selbst aufgebracht (siehe Fig. 2B). Zusätzlich wird jedoch ein weiterer Produktidentifizierer bzw. Kennung aufgebracht, die das Produkt eindeutig identifiziert und die im Klartext lesbar ist.

Diese weitere Kennung kann beispielsweise aus einer fortlaufenden Datensatznummer bestehen, die jeweils für einen bestimmten Artikel mit der 1 beginnt oder wie im vorliegenden Beispiel über verschiedene Artikelnummern desselben oder auch mehrerer Hersteller fortlaufend ist. Zu jedem Datensatz wird nun in der Datenbank entsprechend der Tabelle in Fig. 2A eine Artikelnummer und eine Seriennummer verzeichnet, wobei die Seriennummer für jeden einzelnen Artikel mit 1 beginnend durchnummeriert ist. Zu jedem Datensatz wird weiterhin der für die Entschlüsselung erforderliche öffentliche Schlüssel notiert bzw. ein Verweis, mit dem der öffentliche Schlüssel identifiziert werden kann, beispielsweise eine Schlüsselnummer oder Zertifikatsnummer wie im vorliegenden Beispiel. Weiterhin findet sich in der Datenbank eine Variable "mark.", die angibt, ob der Datensatz als "verkauft" markiert ist oder nicht. Findet sich in dieser Variablen "mark." eine 1, so wurde das zu diesem Datensatz gehörende Produkt bereits verkauft. Findet sich dort eine 0, so ist das zugehörige Produkt noch nicht als an den Endverbraucher abgegeben gemeldet. In der Datenbank können dann noch weitere Informationen wie z.B. das Produktionsdatum, das Auslieferungsdatum, das Verfallsdatum und weitere nicht dargestellte Informationen über das jeweilige Produkt aufgeführt sein. Der Produktidentifizierer muß nicht notwendigerweise in der Datenbank gespeichert sein, sie kann jedoch dort in entschlüsselter Form vorliegen. Der mit dem privaten Schlüssel des zugehörigen Zertifikats verschlüsselte Produktidentifizierer wird nun in zwei Abschnitte zerlegt, im vorliegenden Beispiel in die ersten 5 Ziffern (Teil A) und die nachfolgenden 251 Ziffern (Teil B) eines mit einem 2048-Bit-Schlüssel verschlüsselten Produktidentifizierers. Hier wird nun der Teil B des verschlüsselten Produktidentifizierers ebenfalls in der Datenbank unter der entsprechenden Datensatznummer gespeichert.

Auf dem Produkt bzw. seiner Verpackung oder irgend einem anderen zu dem Produkt gehörigen Teil, das hier ebenfalls unter dem Begriff Verpackung verstanden werden soll, wird nun zum einen die Internetadresse des Registrierungsservers (z.B. www.firma.de) sowie die Datensatznummer und der Teil A des verschlüsselten Produktidentifizierers und gegebenenfalls das Kennzeichen zur Unterscheidung identischer Teile A aufgedruckt.

Damit ist es für jeden in der Verteilungskette bis zum Endverbraucher möglich, anhand der Datensatznummer in dem Registrierungsserver auf den öffentlichen Schlüssel sowie auf Produktdaten wie Produktionsdatum oder Verfallsdatum oder Hersteller und dergleichen Zugriff zu nehmen. Weiterhin kann er anhand des Eintrags in der Spalte "mark." feststellen, ob das Produkt bereits als verkauft gilt, also womöglich Nachahmungen im Umlauf sind, oder tatsächlich noch nie ein Produkt mit diesen Angaben auf dem Produkt oder seiner Verpackung verkauft wurde.

Zur Authorisierung des Anfragenden gibt dieser dann den Teil A des verschlüsselten Produktidentifizierers ein, der Registrierungsserver ergänzt aus Kenntnis der Datensatznummer sowie gegebenenfalls des Kennzeichens den Teil B des verschlüsselten Produktidentifizierers und kann den zusammengesetzten und vervollständigten verschlüsselten Produktidentifizierer mit Hilfe des öffentlichen Schlüssels entschlüsseln und so überprüfen, ob tatsächlich der Teil A des verschlüsselten Produktidentifizierers zum angegebenen Datensatz gehört.

Dieses Beispiel kann auch so ausgestaltet werden, dass erst nach einer derartigen Authentifizierung des Anfragenden bzw. des angefragten Produktes die weiteren Produktinformationen, die zu der Datensatznummer gespeichert sind, bekannt gegeben werden.

In einem weiteren Beispiel soll eine besonders vorteilhafte Markierungsstrategie dargestellt werden.

Dabei sind im Datenmodell der Herstellerproduktdatenbank zwei Tabellen T_PRODSIGS und T_PRODROUTES vorgesehen, bei denen zwei Spalten mit der Bezeichnung T_PRODSIGS.CHECKMARK und T_PRODROUTES.CURRENT_CHECKMARK als Markierungsfelder veränderlich sind.

### T PRODSIGS.CHECKMARK:

Bezeichnet den "Status" einer Produkteinheit nach erfolgter Prüfung. Dabei können folgende Werte auftreten:
- 0: Produkteinheit ist unmarkiert. Sie befindet sich im Umlauf oder wurde noch nicht in Umlauf gebracht. Dieser Wert ist auch der Initialzustand.
- 1: Produkteinheit wurde von einem Händler erfolgreich geprüft und an einen Endkunden verkauft. Diese Produkteinheit kann also fortan bei Produktprüfungen durch einen Händler nicht mehr auftauchen.
- 10: Produkteinheit wurde von einem Händler erfolgreich geprüft. Es trat bisher keine Fälschung auf.
- -10: Produkteinheit wurde von einem Händler geprüft. Allerdings handelt es sich um keinen validen Signaturcode. Es wurde offensichtlich versucht, eine Fälschung einzuschleusen.
- -100: Produkteinheit wurde von einem Händler geprüft. Der Signaturcode ist valide, allerdings befindet sich eine Produkteinheit mit dem gleichen Signaturcode bereits in Umlauf . Es handelt sich offensichtlich um eine Fälschung in Form eines Duplikats.

### T PRODROUTES.CURRENT CHECKMARK:

Enthält eine Kopie von T_PRODSIGS.CHECKMARK und bezeichnet den momentanen Prüfstatus durch einen bestimmten Händler. Die Einführung dieses Indikators verhindert (allerdings nur zum Teil) eine "Denial of Service"-Attacke auf das System.

In der lokalen Datenbank des Händlers tritt ein weiteres mit der Produktprüfung direkt verbundenes Feld auf: T_PRODSTORE.STATUS. Dieses "Status-Flag" wird durch das Prüfprotokoll nach einer Produktprüfung gesetzt:

### T PRODS STORE.STATUS:

Hier sind drei Präkonditionen zu berücksichtigen:
1. Der Status vor einer Prüfung (Pre-Check)
2. Der Status nach einer Wareneingangsprüfung (Check-In)
3. Der Status nach einer Warenausgangsprüfung (Check-Out)

Außerdem gibt es noch einen Sonderstatus. In dem Fall, dass eine Prüfung aufgrund eines Verbindungsproblems zum Prüfserver des Herstellers fehlschlägt, wird der Status "Server Error" gesetzt.

### Insgesamt können folgende Stati auftreten:

### Pre-Check:

- 0: Eine Prüfung (Check-In) wurde noch nicht durchgeführt, kann aber durchgeführt werden. Es ist eine Produktsignatur vorhanden.
- 1: Eine Prüfung (Check-In) wurde noch nicht durchgeführt und kann auch nicht durchgeführt werden. Es ist keine Produktsignatur vorhanden. Dies kommt vor, falls es sich um ein Produkt ohne Produktidentifizierer handelt oder der Händler sich nicht an dem erfindungsgemäßen System beteiligt.
- 2: Analog (0), lediglich Check-Out.
- 3: Analog (1), lediglich Check-Out.

### Check-In:

- 10: Produktprüfung war erfolgreich. Produkt wurde in der Produktdatenbank des Herstellers registriert.
- -10: Produktprüfung ist fehlgeschlagen. Offensichtlich wurde versucht, eine Fälschung einzuschleusen. Diese Produkteinheit darf nicht verkauft werden. Die Daten wurden in der Produktdatenbank des Herstellers registriert.

### Check-Out:

- 100: Warenausgang wurde in der Produktdatenbank des Herstellers erfolgreich registriert. Diese Produkteinheit kann verkauft werden.
- -100: Registrierung des Warenausgangs fehlgeschlagen. Der prüfende Händler ist nicht autorisiert, einen Warenausgang durchzuführen (Dieser Wert dient lediglich dazu, um Attacken auf das System vorzubeugen). In der Umgebung eines Händlerwarenwirtschaftssystems wird dieser Wert nicht auftreten, zumal die automatisierten Prüfmechanismen lediglich valide Prüfungen durchführen.

### Sonstiges:

- -1000: Verbindungsfehler. Eine Prüfung (Check-In oder Check-Out) konnte aufgrund eines Verbindungsproblems nicht durchgeführt werden.

## Patentansprüche

1. Produktsicherungssystem zur Authentifizierung von verpackten, unverpackten und/oder mit einem Beipack und/oder Anhänger versehenen Produkten und/oder deren Hersteller, Vertreiber bzw. Verteiler mit
mindestens jeweils einem Produktidentifizierer, der jedes einzelne Produkt des Herstellers, Vertreibers bzw. Verteilers eindeutig identifiziert,
mindestens einem digitalen Siegel für jeden Produktidentifizierer, das dem jeweiligen Produktidentifizierer eindeutig zuordenbar bzw. zugeordnet ist,
wobei das digitale Siegel ganz oder teilweise auf, in und/oder an dem durch den Produktidentifizierer identifizierten Produkt, seinen Verpackungen und/oder einem Beipack und/oder einem Anhänger hierzu erkennbar an- oder aufgebracht ist,
sowie mit mindestens einem Registrierungsserver (2) mit einer Datenbank, die die Produktidentifizierer der durch das Produktsicherungssystem gesicherten Produkte enthält, **dadurch gekennzeichnet,**
**dass** auf dem Produkt und/oder der Verpackung nur ein Abschnitt des digitalen Siegels aufgebracht ist und
**dass** gegebenenfalls in dem Registrierungsserver (2) der den aufgebrachten Abschnitt des digitalen Siegels zum vollständigen digitalen Siegel ergänzende Teil des digitalen Siegels gespeichert ist.

2. Produktsicherungssystem nach dem vorhergehenden Anspruch, **dadurch gekennzeichnet,**
**dass** das digitale Siegel eine in digitaler Form darstellbare Information ist, die dem Produkt zusätzlich zum Produktidentifizierer zugeordnet ist, um die Authentizität des Produktes und/oder dessen Hersteller, Vertreiber bzw. Verteiler zu überprüfen.

3. Produktsicherungssystem nach einem der vorhergehenden Ansprüche, **dadurch gekennzeichnet,**
**dass** das digitale Siegel durch Anwendung einer mathematischen Funktion auf den Produktidentifizierer erzeugbar ist.

4. Produktsicherungssystem nach dem vorhergehenden Anspruch, **dadurch gekennzeichnet,**
**dass** das digitale Siegel mittels symmetrischer Verschlüsselung des zugeordneten Produktidentifizierers mit einem geheimen Schlüssel oder mittels asymmetrischer Verschlüsselung des zugeordneten Produktidentifizierers mit einem privaten Schlüssel erzeugt wurde oder erzeugbar ist.

5. Produktsicherungssystem nach Anspruch 3, **dadurch gekennzeichnet,**
**dass** das digitale Siegel ein dem jeweiligen Produktidentifizierer zugeordneter Nachrichtenauthentifizierungscode (Message Authentication Code, MAC) ist.

6. Produktsicherungssystem nach dem vorhergehenden Anspruch, **dadurch gekennzeichnet,**
**dass** der Nachrichtenauthentifizierungscode durch Anwendung einer Hash-Funktion auf den Produktidentifizierer erzeugt wurde oder erzeugbar ist.

7. Produktsicherungssystem nach Anspruch 4, **gekennzeichnet durch**
mindestens einen privaten (geheimen) Schlüssel für die symmetrische Kryptographie oder mindestens ein Zertifikat enthaltend ein Schlüsselpaar aus öffentlichem Schlüssel und privatem Schlüssel für die asymmetrische Kryptographie, wobei der Produktidentifizierer in mit dem symmetrischen bzw. asymmetrischen privaten Schlüssel verschlüsselter Form als digitales Siegel ganz oder teilweise in, auf und/oder an dem **durch** den Produktidentifizierer identifizierten Produkt, seiner Verpackung und/oder einem Beipack und/oder Anhänger hierzu erkennbar aufgebracht ist,
wobei die Datenbank die Produktidentifizierer sämtlicher **durch** das Produktsicherungssystem gesicherten Produkte in unverschlüsselter und/oder zusätzlich zumindest teilweise in mit dem symmetrischen bzw. asymmetrischen privaten Schlüssel verschlüsselter Form enthält.

8. Produktsicherungssystem nach dem vorhergehenden Anspruch, **gekennzeichnet**
**durch** eine Zertifizierungsstelle bzw. Trustcenter, die dem Hersteller, Vertreiber bzw. Verteiler des Produktes oder der Verpackung das mindestens eine Zertifikat mit einem Schlüsselpaar aus öffentlichem Schlüssel und privatem Schlüssel zur Verfügung steht.

9. Produktsicherungssystem nach Anspruch 7 oder Anspruch 8, **dadurch gekennzeichnet,**
**dass** der verschlüsselte Produktidentifizierer und gegebenenfalls der öffentliche Schlüssel des Zertifikats und/oder ein Verweis auf den Eintrag des öffentlichen Schlüssels des Zertifikats in einer Datenbank und/oder gegebenenfalls der Produktidentifizierer in unverschlüsselter Form zumindest teilweise auf dem durch den Produktidentifizierer identifizierten Produkt, seiner Verpackung und/oder einem Beipack und/oder Anhänger oder dergleichen hierzu erkennbar aufgebracht sind.

10. Produktsicherungssystem nach dem vorhergehenden Anspruch, **dadurch gekennzeichnet,**
**dass** der verschlüsselte Produktidentifizierer und gegebenenfalls der öffentliche Schlüssel des Zertifikats und/oder ein Verweis auf den Eintrag des öffentlichen Schlüssels des Zertifikats in einer Datenbank und/oder gegebenenfalls der Produktidentifizierer in unverschlüsselter Form in Form von Ziffernfolgen, als Barcode, als Balkencode, als Magnetstreifen und/oder als Mikrochip bzw. RFID-Marke (RFID-Tag) aufgebracht ist.

11. Produktsicherungssystem nach einem der vorhergehenden Ansprüche, **dadurch gekennzeichnet,**
**dass** der Produktidentifizierer mindestens eine Seriennummer zur eindeutigen Identifizierung des Produktes enthält.

12. Produktsicherungssystem nach einem der vorhergehenden Ansprüche, **dadurch gekennzeichnet,**
**dass** der Produktidentifizierer mindestens eine der folgenden Komponenten und/oder mindestens einen Verweis auf mindestens eine dieser Komponenten enthält, wobei diese Komponenten nicht notwendigerweise in dem Registrierungsserver gespeichert sein müssen:
Informationen zum Hersteller, Vertreiber bzw. Verteiler oder
Informationen (Produktkennung) über das Produkt, beispielsweise Produktart, Herstellungsort, Herstellungsdatum, Produktionsdatum, Produktionscharge, Indikationen, Anwendungsvorschriften, Warnhinweise, Verfalldatum oder dergleichen oder einen Verweis auf einen entsprechenden Eintrag mit derartigen Informationen in einer Datenbank.

13. Produktsicherungssystem nach einem der vorhergehenden Ansprüche, **gekennzeichnet durch**
eine Kommunikationseinrichtung (3, 13a, 13b) zur Kommunikation Dritter mit dem Registrierungsserver (2).

14. Produktsicherungssystem nach dem vorhergehenden Anspruch, **dadurch gekennzeichnet,**
**dass** die Kommunikationseinrichtung eine Telefonverbindung (13a, 13b) oder ein elektronisches Netzwerk, insbesondere das Internet ist.

15. Produktsicherungssystem nach einem der vorhergehenden Ansprüche, **gekennzeichnet durch**
ein digitales Siegel für jeden Produktidentifizierer, das dem jeweiligen Produktidentifizierer eineindeutig zuordenbar bzw. zugeordnet ist.

16. Produktsicherungssystem nach einem der Ansprüche 1 bis 14, **gekennzeichnet durch**
mindestens zwei digitalen Siegeln für jeden Produktidentifizierer, die dem jeweiligen Produktidentifizierer eindeutig zuordenbar bzw. zugeordnet sind,
wobei die mindestens zwei digitalen Siegel jeweils ganz oder teilweise auf verschiedenen oder gleichen Elementen angeordnet sind, wobei die Elemente das **durch** den Produktidentifizierer identifizierte Produkt, seine Verpackungen und/oder Beipack und/oder Anhänger hierzu sind.

17. Verfahren zur Authentifizierung von Produkten und/oder deren Herstellern, Vertreiber bzw. Verteiler,
wobei zu jedem Produkt jeweils ein Produktidentifizierer, der das Produkt eindeutig identifiziert in einer Datenbank auf mindestens einem Registrierungsserver gespeichert wird,
jedem Produktidentifizierer mindestens ein digitales Siegel eindeutig zugeordnet wird,
das digitale Siegel ganz oder teilweise gegebenenfalls zusammen mit dem Produktidentifizierer auf, in und/oder an dem durch den Produktidentifizierer identifizierten Produkt, seinen Verpackungen und/oder einem Beipack und/oder Anhänger hierzu erkennbar an- oder aufgebracht wird,
bei Lieferung oder Verkauf eines Produktes an einen Empfänger das in, an oder auf dem Produkt, der Verpackung, dem Beipack und/oder Anhänger angeordnete Teil des digitalen Siegels zumindest teilweise dem Registrierungsserver mitgeteilt wird,
und der Registrierungsserver Informationen über die Lieferung bzw. den Verkauf zu dem Produktidentifizierer speichert,
**dadurch gekennzeichnet,**
**dass** auf dem Produkt und/oder Verpackung nur ein Abschnitt des digitalen Siegels aufgebracht wird,
und gegebenenfalls der zur Ergänzung zum vollständigen digitalen Siegel erforderliche Rest des digitalen Siegels in dem Registrierungsserver gespeichert wird, der Registrierungsserver nach Eingabe des auf dem Produkt oder der Verpackung aufgebrachten Teils des digitalen Siegels diese zum vollständigen digitalen Siegel ergänzt und entschlüsselt.

18. Verfahren nach dem vorhergehenden Anspruch, **dadurch gekennzeichnet,**
**dass** als digitales Siegel eine in digitaler Form darstellbare Information verwendet wird, die dem Produkt zusätzlich zum Produktidentifizierer zugeordnet ist, um die Authentizität des Produktes und/oder dessen Hersteller, Vertreiber bzw. Verteiler zu überprüfen.

19. Verfahren nach einem der beiden vorhergehenden Ansprüche, **dadurch gekennzeichnet,**
**dass** das digitale Siegel durch Anwendung einer mathematischen Funktion auf den Produktidentifizierer erzeugt wird.

20. Verfahren nach einem der Ansprüche 17 bis 19,
**dadurch gekennzeichnet,**
**dass** zu jedem Produktidentifizierer ein eineindeutiges digitales Siegel verwendet wird.

21. Verfahren nach einem der Ansprüche 17 bis 20,
**dadurch gekennzeichnet,**
**dass** bei Lieferung oder Verkauf eines Produkts der Empfänger bzw. Käufer das digitale Siegel ganz oder teilweise dem Registrierungsserver mitteilt und der Registrierungsserver den Produktidentifizierer als verkauft bzw. geliefert markiert.

22. Verfahren nach einem der Ansprüche 17 bis 21,
**dadurch gekennzeichnet,**
**dass** bei Lieferung oder Verkauf eines Produkts der Verkäufer bzw. Lieferant das digitale Siegel ganz oder teilweise dem Registrierungsserver mitteilt und der Registrierungsserver die Markierung des Produktidentifizierers als verkauft bzw. geliefert aufhebt.

23. Verfahren nach einem der Ansprüche 17 bis 22,
**dadurch gekennzeichnet;**
**dass** bei Lieferung oder Verkauf eines Produkts der Empfänger bzw. Käufer dem Registrierungsserver eine empfängerspezifische bzw. käuferspezifische Identifikation mitteilt und der Registrierungsserver zu dem Produktidentifizierer des Produkts die empfängerspezifische bzw. käuferspezifische Identifikation speichert.

24. Verfahren nach dem vorhergehenden Anspruch, **dadurch gekennzeichnet,**
**dass** bei Lieferung oder Verkauf eines Produktes der Verkäufer bzw. Lieferant das digitale Siegel ganz oder teilweise dem Registrierungsserver mitteilt und der Registrierungsserver die käuferspezifische bzw. lieferantenspezifische Identifikation löscht oder markiert.

25. Verfahren nach einem der Ansprüche 17 bis 24,
**dadurch gekennzeichnet,**
**dass** bei Lieferung, Empfang, Verkauf und/oder Kauf eines Produkts der Lieferant, Empfänger, Verkäufer und/oder Käufer dem Registrierungsserver eine lieferantenspezifische, empfängerspezifische, verkäuferspezifische und/der käuferspezifische Identifikation mitteilt und der Registrierungsserver zu dem Produktidentifizierer des Produkts diese zusätzlich speichert oder bestehende entsprechende Identifikationen durch diese ersetzt.

26. Verfahren nach einem der Ansprüche 17 bis 25,
**dadurch gekennzeichnet,**
**dass** wenn der entsprechende Produktidentifizierer auf dem Registrierungsserver bereits als verteilt bzw. verkauft markiert ist, das zu prüfende Produkt als Plagiat erkannt wird, oder wenn der Produktidentifizierer auf dem Registrierungsserver noch nicht als verteilt bzw. verkauft markiert ist, sie nunmehr entsprechend markiert wird.

27. Verfahren nach einem der Ansprüche 17 bis 26,
**dadurch gekennzeichnet,**
**dass** auf dem Produkt und/oder der Verpackung eine weitere Produktkennung im Klartext aufgebracht ist, durch die gegebenenfalls zusammen mit dem aufgebrachten Teil des digitalen Siegels das Produkt und/oder die Verpackung eineindeutig identifizierbar ist.

28. Verfahren nach dem vorhergehenden Anspruch, **dadurch gekennzeichnet, dass** die weitere Produktkennung zusammen mit dem aufgebrachten Teil des digitalen Siegels in den Registrierungsserver eingegeben wird, der Registrierungsserver das Produkt und/oder die Verpackung identifiziert und das digitale Siegel vervollständigt.

29. Verfahren nach einem der Ansprüche 17 bis 28,
**dadurch gekennzeichnet,**
**dass** die Authentizität des Herstellers und/oder Vertreibers bzw. Verteilers des Produktes anhand der in den Registrierungsserver eingegebenen Daten überprüft wird.

30. Verfahren nach einem der Ansprüche 17 bis 29,
**dadurch gekennzeichnet,**
**dass** bei Lieferung oder Verkauf eines Produktes der auf dem Produkt, der Verpackung, dem Beipack und/oder Anhänger oder dergleichen aufgebrachte Teil des digitalen Siegels und gegebenenfalls die weitere Produktkennung und/oder der öffentliche Schlüssel durch schriftliche oder telefonische Anfrage oder über ein elektronisches Kommunikationsnetzwerk, beispielsweise das Internet, dem Registrierungsserver mitgeteilt wird.

31. Verfahren nach einem der Ansprüche 17 bis 21,
**dadurch gekennzeichnet,**
**dass** der Produktidentifizierer mindestens eine vorzugsweise fortlaufende Seriennummer zur eindeutigen Identifizierung des Produktes enthält.

32. Verfahren nach einem der Ansprüche 17 bis 31,
**dadurch gekennzeichnet,**
**dass** der Produktidentifizierer zusätzlich mindestens eine der folgenden Komponenten oder mindestens einen Verweis auf mindestens eine dieser Komponenten enthält, wobei diese Komponenten nicht notwendigerweise in dem Registrierungsserver gespeichert werden müssen:
Informationen zum Hersteller, Vertreiber bzw. Verteiler oder
Informationen (Produktkennung) über das Produkt, beispielsweise Produktart, Herstellungsort, Herstellungsdatum, Produktionsdatum, Produktionscharge, Indikationen, Anwendungsvorschriften, Warnhinweise, Verfallsdatum oder dergleichen oder einen Verweis auf einen entsprechenden Eintrag mit derartigen Informationen in einer Datenbank.

33. Verfahren nach einem der Ansprüche 17 bis 32,
**dadurch gekennzeichnet,**
**dass** zu jedem Produktidentifizierer mindestens zwei digitale Siegel verwendet und in, an und/oder auf gleichen oder verschiedenen Elementen angeordnet werden, wobei die Elemente das durch den Produktidentifizierer identifizierte Produkt, seine Verpackung und/oder Beipack und/oder Anhänger hierzu sind.

34. Verfahren nach einem der Ansprüche 17 bis 33,
**dadurch gekennzeichnet,**
**dass** das digitale Siegel mittels symmetrischer Verschlüsselung des zugeordneten Produktidentifizierers mit einem geheimen Schlüssel oder mittels asymmetrischer Verschlüsselung des zugeordneten Produktidentifizierers mit einem privaten Schlüssel oder durch Anwendung einer Hash-Funktion auf den zugeordneten Produktidentifizierer zur Erzeugung eines Nachrichtenidentifizierungscodes (Message Authentication Code, MAC) erzeugt wird.

35. Verfahren nach dem vorhergehenden Anspruch, **dadurch gekennzeichnet,**
**dass** der Produktidentifizierer mittels eines geheimen Schlüssels für die symmetrische Kryptographie oder eines privaten Schlüssels eines Schlüsselpaares bzw. Zertifikates aus privatem Schlüssel und öffentlichem Schlüssel für die asymmetrische Kryptographie zu einem digitalen Siegel verschlüsselt wird,
der verschlüsselte Produktidentifizierer ganz oder teilweise, gegebenenfalls zusammen mit dem unverschlüsselten Produktidentifizierer und/oder einem Verweis auf den Eintrag des öffentlichen Schlüssels des Zertifikats in einer Datenbank zumindest teilweise auf dem Produkt, seiner Verpackung, einem Beipack, Annäher, Aufkleber und/oder Anhänger hierzu oder dergleichen, erkennbar aufgebracht wird,
bei Lieferung oder Verkauf eines Produktes an einen Empfänger der auf dem Produkt, der Verpackung, dem Beipack und/oder Anhänger aufgebrachte Teil der verschlüsselte Produktidentifizierer dem Registrierungsserver mitgeteilt wird,
der Registrierungsserver den verschlüsselten Produktidentifizierer gegebenenfalls ergänzt und mit dem privaten oder öffentlichen Schlüssel entschlüsselt, und
der Registrierungsserver Informationen über die Lieferung bzw. dem Verkauf zu dem Produktidentifizierer speichert.

36. Verfahren nach dem vorhergehenden Anspruch, **dadurch gekennzeichnet,**
**dass** auf dem Produkt, seiner Verpackung, einem-Beipack und/oder Anhänger hierzu oder dergleichen der öffentliche Schlüssel und/oder ein Verweis auf den Eintrag des öffentlichen Schlüssels des Zertifikats in einer Datenbank, insbesondere in dem Registrierungsserver, erkennbar aufgebracht wird, der öffentliche Schlüssel und/oder gegebenenfalls der Verweis hierauf in dem Registrierungsserver gespeichert wird und/oder der öffentliche Schlüssel anderweitig beliebig zugänglich gemacht wird.

37. Verfahren nach einem der beiden vorhergehenden Ansprüche, **dadurch gekennzeichnet,**
**dass** dem Registrierungsserver der öffentliche Schlüssel mitgeteilt wird.

38. Produkt,
mit folgenden, auf dem Produkt und/oder der Verpackung selbst erkennbar aufgebrachten, Informationen:
ein Abschnitt eines digitalen Siegels, das eindeutig einem Produktidentifizierer zugeordnet ist, wobei der Produktidentifizierer das Produkt eindeutig identifiziert,
wobei gegebenenfalls der aufgebrachte Abschnitt des digitalen Siegels durch einen den aufgebrachten Abschnitt ergänzenden Teil, welcher in einem Registrierungsserver gespeichert ist, ergänzbar ist.

39. Produkt nach dem vorhergehenden Anspruch, **dadurch gekennzeichnet,**
**dass** das digitale Siegel durch Anwendung einer mathematischen Funktion auf den zugeordneten Produktidentifizierer erzeugbar oder erzeugt ist.

40. Produkt nach dem vorhergehenden Anspruch, **dadurch gekennzeichnet,**
**dass** das digitale Siegel mittels symmetrischer Verschlüsselung des zu geordneten Produktidentifizierers mit einem geheimen Schlüssel, mittels asymmetrischer Verschlüsselung des zugeordneten Produktidentifizierer mit einem privaten Schlüssel oder mittels Anwendung einer Hash-Funktion auf den zugeordneten Produktidentifizierer erzeugbar oder erzeugt ist.

41. Produkt nach einem der Ansprüche 38 bis 40, **dadurch gekennzeichnet,**
**dass** auf dem Produkt selbst ein weiterer Produktidentifizierer unverschlüsselt erkennbar aufgebracht ist.

42. Produkt nach einem der beiden vorhergehenden Ansprüche, **dadurch gekennzeichnet,**
**dass** auf dem Produkt selbst der öffentliche Schlüssel und/oder ein Verweis auf den Eintrag des öffentlichen Schlüssels in einer Datenbank und/oder der unverschlüsselte Produktidentifizierer erkennbar aufgebracht ist.

43. Produkt nach einem der drei vorhergehenden Ansprüche, **dadurch gekennzeichnet, dass** der verschlüsselte Produktidentifizierer, der weitere Produktidentifizierer, der öffentliche Schlüssel des Zertifikats und/oder der unverschlüsselte Produktidentifizierer in Form von Zahlenfolgen, als Magnetstreifen, als Mikrochip bzw. RFID-Marke (RFID-Tag), als Barcode und/oder als Balkencode oder dergleichen aufgebracht sind.

44. Produkt nach einem der Ansprüche 38 bis 43, **dadurch gekennzeichnet,**
**dass** der Produktidentifizierer eine vorzugsweise fortlaufende Seriennummer zur eindeutigen Identifizierung des Produktes enthält.

45. Produkt nach einem der Ansprüche 38 bis 44, **dadurch gekennzeichnet,**
**dass** der Produktidentifizierer zusätzlich eine der folgenden Komponenten oder einen Verweis auf diese Komponenten enthält:
Informationen zum Hersteller, Vertreiber bzw. Verteiler oder
Informationen (Produktkennung) über das Produkt, beispielsweise Produktart, Herstellungsort, Herstellungsdatum, Produktionsdatum, Produktionscharge, Indikationen, Anwendungsvorschriften, Warnhinweise, Verfallsdatum oder dergleichen oder einen Verweis auf einem entsprechenden Eintrag mit derartigen Informationen in einer Datenbank.

46. Produktverpackung,
mit folgenden, auf der Produktverpackung selbst erkennbar aufgebrachten, Informationen:
ein Abschnitt eines digitalen Siegels, das eindeutig einem Produktidentifizierer zugeordnet ist, der das Produkt eindeutig identifiziert,
wobei gegebenenfalls der aufgebrachte Abschnitt des digitalen Siegels durch einen den aufgebrachten Abschnitt ergänzenden Teil, welcher in einem Registrierungsserver gespeichert ist, ergänzbar ist.

47. Produktverpackung nach dem vorhergehenden Anspruch, **dadurch gekennzeichnet,**
**dass** das digitale Siegel durch Anwendung einer mathematischen Funktion auf den zugeordneten Produktidentifizierer erzeugbar oder erzeugt ist.

48. Produktverpackung nach dem vorhergehenden Anspruch, **dadurch gekennzeichnet,**
**dass** das digitale Siegel mittels symmetrischer Verschlüsselung des zu geordneten Produktidentifizierers mit einem geheimen Schlüssel, mittels asymmetrischer Verschlüsselung des zugeordneten Produktidentifizierer mit einem privaten Schlüssel oder mittels Anwendung einer Hash-Funktion auf den zugeordneten Produktidentifizierer erzeugbar oder erzeugt ist.

49. Produktverpackung nach einem der Ansprüche 46 bis 48, **dadurch gekennzeichnet,**
**dass** auf der Produktverpackung ein weiterer Produktidentifizierer unverschlüsselt erkennbar aufgebracht ist.

50. Produktverpackung nach einem der beiden vorhergehenden Ansprüche, **dadurch gekennzeichnet,**
**dass** auf ihr der öffentliche Schlüssel des Zertifikats und/oder der unverschlüsselte Produktidentifizierer erkennbar aufgebracht ist.

51. Produktverpackung nach einem der drei vorhergehenden Ansprüche, **dadurch gekennzeichnet,**
**dass** der verschlüsselte Produktidentifizierer, die weitere Kennung, der unverschlüsselte Produktidentifizierer und/oder der öffentliche Schlüssel des Zertifikats und/oder ein Verweis auf den Eintrag des öffentlichen Schlüssels des Zertifikats in einer Datenbank in Form von Ziffernfolgen als Magnetstreifen, als Mikrochip bzw. RFID-Marke (RFID-Tag), als Barcode und/oder als Balkencode aufgebracht sind.

52. Produktverpackung nach einem der Ansprüche 46 bis 51, **dadurch gekennzeichnet,**
**dass** der Produktidentifizierer mindestens eine vorzugsweise fortlaufende Seriennummer zur eindeutigen Identifizierung des Produktes enthält.

53. Produktverpackung nach einem der Ansprüche 46 bis 52, **dadurch gekennzeichnet,**
**dass** der Produktidentifizierer zusätzlich mindestens eine der folgenden Komponenten oder mindestens einen Verweis auf mindestens eine dieser Komponenten enthält:
Informationen zum Hersteller, Vertreiber bzw. Verteiler oder
Informationen (Produktkennung) über das Produkt, beispielsweise Produktart, Herstellungsort, Herstellungsdatum, Produktionsdatum, Produktionscharge, Indikationen, Anwendungsvorschriften, Warnhinweise, Verfallsdatum oder dergleichen oder mindestens einen Verweis auf einen entsprechenden Eintrag mit derartigen Informationen in einer Datenbank.

54. Verwendung eines Produktsicherungssystems, Verfahrens, Produktes oder einer Verpackung nach einem der vorhergehenden Ansprüche im Vertrieb eines Medikamentes, Kleidungsstückes, Lebensmittels, Kinder- oder Babynahrung, Fleischwaren, Ersatzteile, Zulieferteile, Halbzeuge, Fertigteile, insbesondere in der Fahrzeug- und Luftfahrtindustrie und dergleichen.

## Claims

1. Product security system for authenticating products that are packaged, unpackaged and / or fitted with an enclosure and / or label tag, and / or their manufacturers, sellers or distributors, having
in each case at least one product identifier which unambiguously identifies each separate product of the manufacturer, seller or distributor,
at least one digital seal for each product identifier which can be or is assigned to the product identifier concerned,
the digital seal being visibly attached or applied on top of, in and / or on the product identified by the product identifier, its packaging and / or an enclosure and / or a label tag,
and having at least one registration server (2) with a database which contains the product identifiers of the products secured by the product security system,
**characterised in that**
only one section of the digital seal is attached to the product and / or the packaging, and
the part of the digital seal that complements the attached section of the digital seal in order to form a complete digital seal is stored if necessary on the registration server (2).

2. Product security system as in the previous claim,
**characterised in that**
the digital seal is an item of information that can be displayed in digital form and that is assigned to the product in addition to the product identifier in order to verify the authenticity of the product and / or of its manufacturer, seller or distributor.

3. Product security system as in one of the preceding claims,
**characterised in that**
the digital seal can be generated by the application of a mathematical function to the product identifier.

4. Product security system as in the previous claim,
**characterised in that**
the digital seal was or can be generated by means of symmetrical encryption of the assigned product identifier with a secret key or by means of asymmetrical encryption of the assigned product identifier with a private key.

5. Product security system as in claim 3,
**characterised in that**
the digital seal is a message authentication code (MAC) assigned to the relevant product identifier.

6. Product security system as in the previous claim,
**characterised in that**
the message authentication code was or can be generated by the application of a hash function to the product identifier.

7. Product security system as in claim 4,
**characterised by**
at least one private (secret) key for symmetrical cryptography or at least one certificate containing a key pair consisting of a public key and a private key for asymmetrical cryptography, the product identifier being applied visibly in the form of a digital seal encrypted with the symmetrical or asymmetrical private key, wholly or partly in, on top of and / or on the product identified by the product identifier, its packaging and / or an enclosure and / or a label tag,
wherein the database contains the product identifiers of all the products secured by the product security system in non-encrypted form and / or additionally at least partly in a form encrypted with the symmetrical or asymmetrical private key.

8. Product security system as in the previous claim,
**characterised by**
a certification centre or trust centre which provides the manufacturer, seller or distributor of the product or of the packaging with the at least one certificate with a key pair consisting of a public key and a private key.

9. Product security system as in claim 7 or claim 8,
**characterised in that**
the encrypted product identifier and, if necessary, the public key of the certificate and / or a reference to the entry of the public key of the certificate in a database and / or if necessary the product identifier in non-encrypted form are visibly applied, at least partly, on the product identified by the product identifier, its packaging and / or an enclosure and / or label tag or similar.

10. Product security system as in the previous claim,
**characterised in that**
the encrypted product identifier and if necessary the public key of the certificate and / or a reference to the entry of the public key of the certificate in a database and / or if necessary the product identifier in non-encrypted form is applied in the form of numeric strings, as a bar code, a strip code, a magnetic strip and / or a microchip or RFID mark (RFID tag).

11. Product security system as in one of the preceding claims,
**characterised in that**
the product identifier contains at least one serial number for the unambiguous identification of the product.

12. Product security system as in one of the preceding claims,
**characterised in that**
the product identifier contains at least one of the following components and / or at least one reference to at least one of these components, wherein these components do not necessarily have to be stored on the registration server:
information on the manufacturer, seller or distributor, or
information (product labelling) on the product, such as the type of product, place of manufacture, date of manufacture, production date, production batch, indications, instructions for use, warning labels, expiry date or similar, or a reference to an appropriate entry with information of this type in a database.

13. Product security system as in one of the preceding claims,
**characterised by**
a communications facility (3, 13a, 13b) for communications by third parties with the registration server (2).

14. Product security system as in the previous claim,
**characterised in that**
the communications facility is a telephone link (13a, 13b) or an electronic network, especially the internet.

15. Product security system as in one of the preceding claims,
**characterised by**
a digital seal for each product identifier, which seal can be or is unambiguously assigned to the relevant product identifier.

16. Product security system as in one of claims 1 to 14,
**characterised by**
at least two digital seals for each product identifier, which seals can be or are unambiguously assigned to the relevant product identifier.
wherein each of the at least two digital seals is assigned wholly or partly to different or the same elements, the elements being the product identified by the product identifier, its packaging and / or an enclosure and / or a label tag.

17. Method of authenticating products and / or their manufacturers, sellers or distributors,
wherein for each product a product identifier which unambiguously identifies the product is stored in a database on at least one registration server,
at least one digital seal is unambiguously assigned to each product identifier, the digital seal is visibly attached or applied, wholly or partly, if necessary together with the product identifier, in and / or on the product identified by the product identifier, its packaging and / or an enclosure and / or a label tag, when a product is delivered or sold to a recipient, the part of the digital seal that is applied to the product, packaging, enclosure and / or label tag is communicated at least partly to the registration server,
and the registration server stores, to the product identifier, information about the delivery or sale,
**characterised in that**
only a section of the digital seal is applied to the product and / or packaging, and if necessary, the remainder of the digital seal needed for the complete digital seal is stored on the registration server, after entering the part of the digital seal on the product or packaging, the registration server completes it and decrypts it to form the full digital seal.

18. Method as in the previous claim,
**characterised in that**
an information item that can be displayed in digital form is used as the digital seal, which item is assigned to the product in addition to the product identifier in order to verify the authenticity of the product and / or its manufacturer, seller or distributor.

19. Method as in one of the two preceding claims,
**characterised in that**
the digital seal is generated by the application of a mathematical function to the product identifier.

20. Method as in one of claims 17 to 19,
**characterised in that**
a reversibly unambiguous seal is used for each product identifier.

21. Method as in one of claims 17 to 20,
**characterised in that**
when a product is delivered or sold, the recipient or buyer communicates the digital seal wholly or partly to the registration server, and the registration server flags the product identifier as being sold or delivered.

22. Method as in one of claims 17 to 21,
**characterised in that**
when a product is delivered or sold, the seller or supplier communicates the digital seal wholly or partly to the registration server, and the registration server removes the flag of the product identifier as being sold or delivered.

23. Method as in one of claims 17 to 22,
**characterised in that**
when a product is delivered or sold, the recipient or buyer communicates a recipient-specific or buyer-specific identification to the registration server, and the registration server saves the recipient-specific or buyer-specific identification to the product identifier of the product.

24. Method as in the previous claim,
**characterised in that**
when a product is delivered or sold, the seller or supplier communicates the digital seal wholly or partly to the registration server, and the registration server deletes or flags the buyer-specific or supplier-specific identification.

25. Method as in one of claims 17 to 24,
**characterised in that**
when a product is delivered, received, sold and / or purchased, the supplier, recipient, seller and / or buyer communicates a supplier-specific, recipient-specific, seller-specific and / or buyer-specific identification to the registration server, and the registration saves it additionally to the product identifier or replaces existing corresponding identifications with it.

26. Method as in one of claims 17 to 25,
**characterised in that**
if the corresponding product identifier on the registration server has already been flagged as distributed or sold, the product that is to be verified is recognised as a plagiarism, or if the product identifier on the registration server has not yet been flagged as distributed or sold, it is now flagged accordingly.

27. Method as in one of claims 17 to 26,
**characterised in that**
an additional product label in plain text is attached to the product and / or the packaging, by means of which, if necessary in conjunction with the applied part of the digital seal, the product and / or the packaging can be identified reversibly unambiguously.

28. Method as in the previous claim,
**characterised in that**
the additional product label is entered into the registration server together with the applied part of the digital seal, the registration server identifies the product and / or packaging, and completes the digital seal.

29. Method as in one of claims 17 to 28,
**characterised in that**
the authenticity of the manufacturer and / or the seller or distributor of the product is verified using the data entered into the registration server.

30. Method as in one of claims 17 to 29,
**characterised in that**
when a product is delivered or sold, the part of the digital seal that is applied to the product, packaging, enclosure and / or label tag or similar, and if necessary the additional product labelling and / or the public key, are communicated to the registration server by a written or telephone enquiry or via an electronic communications network, for example the internet.

31. Method as in one of claims 17 to 21,
**characterised in that**
the product identifier contains at least one preferably consecutive serial number for the unambiguous identification of the product.

32. Method as in one of claims 17 to 31,
**characterised in that**
the product identifier additionally contains at least one of the following components or at least one reference to at least one of these components,
wherein these components do not necessarily have to be stored on the registration server:
information on the manufacturer, seller or distributor, or
information (product labelling) on the product, such as the type of product, place of manufacture, date of manufacture, production date, production batch, indications, instructions for use, warning labels, expiry date or similar, or a reference to an appropriate entry with information of this type in a database.

33. Method as in one of claims 17 to 32,
**characterised in that**
at least two seals are used for each product identifier, and are positioned in, on and / or on top of the same or different elements, the elements being product identified by the product identifier, its packaging and / or an enclosure and / or a label tag.

34. Method as in one of claims 17 to 33,
**characterised in that**
the digital seal is generated by means of symmetrical encryption of the assigned product identifier with a secret key, or by means of asymmetrical encryption of the assigned product identifier with a private key, or by the application of a hash function to the assigned product identifier to generate a message authentication code (MAC).

35. Method as in the previous claim,
**characterised in that**
the product identifier is encrypted to form a digital seal by means of a secret key for symmetrical cryptography, or of a private key of a key pair or certificate consisting of a private key and a public key for asymmetrical cryptography,
the encrypted product identifier is visibly attached at least partly to the product, its packaging, an enclosure, label, sticker and / or label tag or similar, wholly or partly, if necessary together with the non-encrypted product identifier and / or a reference to the entry of the public key of the certificate in a database,
when a product is delivered or sold to a recipient, the part of the encrypted product identifier that has been applied to the product, packaging, enclosure and / or label tag is communicated to the registration server,
the registration server completes, if necessary, and decodes the encrypted product identifier using the private or public key, and
the registration server saves, to the product identifier, information about the delivery or sale.

36. Method as in the preceding claims,
**characterised in that**
on the product, its packaging, an enclosure and / or a label tag or similar, the public key and / or a reference to the entry of the public key of the certificate in a database, in particular on the registration server, is applied visibly, the public key and / or if necessary the reference to it in the registration server is stored, and / or the public key is made accessible elsewhere as required.

37. Method as in one of the two preceding claims,
**characterised in that**
the public key is communicated to the registration server.

38. Product having the following information applied visibly on the product and /or the packaging themselves:
a section of a digital seal that is unambiguously assigned to a product identifier, the product identifier identifying the product unambiguously,
wherein, if necessary, the applied section of the digital seal can be completed by a part that complements the applied section and which is stored on a registration server.

39. Product as in the preceding claim,
**characterised in that**
the digital seal can be or is generated by the application of a mathematical function to the assigned product identifier.

40. Product as in the previous claim,
**characterised in that**
the digital seal can be or is generated by means of symmetrical encryption of the assigned product identifier with a secret key, by means of asymmetrical encryption of the assigned product identifier with a private key, or by means of the application of a hash function to the assigned product identifier.

41. Product as in one of claims 38 to 40,
**characterised in that**
on the product itself, an additional product identifier is applied visibly in non-encrypted form.

42. Product as in one of the two preceding claims,
**characterised in that**
on the product itself, the public key and / or a reference to the entry of the public key in a database, and / or the non-encrypted product identifier are applied visibly.

43. Product as in one of the three preceding claims,
**characterised in that**
the encrypted product identifier, the additional product identifier, the public key of the certificate and / or the non-encrypted product identifier are applied in the form of numeric strings as magnetic strips, as a microchip or RFID tag, as a barcode and / or as a strip code or similar.

44. Product as in one of claims 38 to 43,
**characterised in that**
the product identifier contains a preferably consecutive serial number for the unambiguous identification of the product.

45. Product as in one of claims 38 to 44,
**characterised in that**
the product identifier additionally contains one of the following components or a reference to these components:
information on the manufacturer, seller or distributor, or
information (product labelling) on the product, for example the type of product, place of manufacture, date of manufacture, production date, production batch, indications, instructions for use, warning labels, expiry date or similar
or a reference to a corresponding entry containing information of this type in a database.

46. Product packaging, having the following information applied visibly on the product packaging itself:
a section of a digital seal that is unambiguously assigned to a product identifier which identifies the product unambiguously,
wherein, if necessary, the applied section of the digital seal can be completed by a part that complements the applied section and which is stored on a registration server.

47. Product packaging as in the previous claim,
**characterised in that**
the digital seal can be or is generated by the application of a mathematical function to the assigned product identifier.

48. Product packaging as in the previous claim,
**characterised in that**
the digital seal can be or is generated by means of symmetrical encryption of the assigned product identifier with a secret key, by means of asymmetrical encryption of the assigned product identifier with a private key, or by means
of the application of a hash function to the assigned product identifier.

49. Product packaging as in one of claims 46 to 48,
**characterised in that**
an additional product identifier is applied visibly in non-encrypted form to the product packaging.

50. Product packaging as in one of the two preceding claims,
**characterised in that**
on it are visibly attached the public key of the certificate and / or the non-encrypted product identifier.

51. Product packaging as in one of the three preceding claims,
**characterised in that**
the encrypted product identifier, the additional labelling, the non-encrypted product identifier and / or the public key of the certificate and / or a reference to the entry of the public key of the certificate in a database are applied in the form of numeric strings as magnetic strips, as a microchip or RFID tag, as a barcode and / or as a strip code.

52. Product packaging as in one of claims 46 to 51,
**characterised in that**
the product identifier contains at least one preferably consecutive serial number for the unambiguous identification of the product.

53. Product packaging as in one of claims 46 to 52,
**characterised in that**
the product identifier additionally contains at least one of the following components or at least one reference to at least one of these components:
information on the manufacturer, seller or distributor, or
information (product labelling) on the product, for example the type of product, place of manufacture, date of manufacture, production date, production batch, indications, instructions for use, warning labels, expiry date or similar,
or at least one reference to a corresponding entry containing information of this type in a database.

54. Use of a product security system, method, product or packaging as in one of the preceding claims in the sale of a medicine, item of clothing, food item, children's or baby food, meat product, spare parts, bought-in components, semifinished products, finished components, especially in the vehicle and aviation industries and similar.

## Revendications

1. Système de garantie de produits pour authentifier des produits conditionnés ou non et/ou munis d'une notice intégrée et/ou d'une étiquette à attacher, et/ou leurs fabricants, leurs vendeurs ou leurs distributeurs, avec
au moins, respectivement, un identificateur de produit, qui identifie clairement chaque produit individuel du fabricant, du vendeur ou du distributeur,
au moins un sceau numérique pour chaque identificateur de produit, qui est affectable ou affecté à l'identificateur de produit respectif de manière univoque,
dans lequel le sceau numérique est fixé ou appliqué, entièrement ou partiellement, de manière reconnaissable à cet effet, sur et/ou dans le produit identifié par l'identificateur de produit, ses emballages et/ou d'une notice intégrée et/ou d'une étiquette à attacher,
ainsi qu'au moins un serveur d'enregistrement (2) avec une base de données, qui contient les identificateurs des produits protégés par le système de garantie de produits,
**caractérisé en ce que**
seule une section du sceau numérique est appliquée sur le produit et/ou l'emballage et
la partie du sceau numérique complétant la section appliquée du sceau numérique, pour obtenir un sceau numérique complet, est éventuellement mémorisée dans le serveur d'enregistrement (2).

2. Système de garantie de produits selon la revendication précédente,
**caractérisé en ce que**
le sceau numérique est une information que l'on peut représenter sous forme numérique, qui est affectée au produit en plus de l'identificateur de produit, pour vérifier l'authenticité du produit et/ou de son fabricant, de son vendeur et/ou de son distributeur.

3. Système de garantie de produits selon l'une quelconque des revendications précédentes,
**caractérisé en ce que**
le sceau numérique peut être généré en appliquant une fonction mathématique à l'identificateur de produit.

4. Système de garantie de produit selon la revendication précédente,
**caractérisé en ce que**
le sceau numérique a été généré ou peut être généré par cryptage symétrique de l'identificateur de produit affecté avec une clé secrète ou par cryptage asymétrique de l'identificateur de produit affecté avec une clé privée.

5. Système de garantie de produits selon la revendication 3,
**caractérisé en ce que**
le sceau numérique est un code d'authentification de message (Message Authentication Code ou MAC) affecté à l'identificateur de produit respectif.

6. Système de garantie de produits selon la revendication précédente,
**caractérisé en ce que**
le code d'authentification de message a été généré ou peut être généré en appliquant une fonction de hachage à l'identificateur de produit.

7. Système de garantie de produits selon la revendication 4,
**caractérisé par**
au moins une clé privée (secrète) pour la cryptographie symétrique ou au moins un certificat contenant une paire de clés, constituée d'une clé publique et d'une clé privée pour la cryptographie asymétrique, dans lequel l'identificateur de produit est appliqué de manière reconnaissable à cet effet sous une forme cryptée avec la clé privée symétrique ou asymétrique comme sceau numérique, en totalité ou en partie sur, dans et/ou au produit identifié par l'identificateur de produit, de son emballage et/ou d'une notice intégrée et/ou d'une étiquette à attacher,
la base de données contenant les identificateurs de tous les produits protégés par le système de garantie de produits sous une forme non cryptée et/ou, en outre, au moins partiellement sous forme cryptée avec la clé privée symétrique ou asymétrique.

8. Système de garantie de produits selon la revendication précédente,
**caractérisé par**
un centre de certification ou trustcenter, qui met à disposition du fabricant, du vendeur ou du distributeur du produit ou de l'emballage le au moins un certificat avec une paire de clés, constituée d'une clé publique et d'une clé privée.

9. Système de garantie de produits selon la revendication 7 ou 8,
**caractérisé en ce que**
l'on applique l'identificateur de produit crypté et éventuellement la clé publique du certificat et/ou une référence à l'inscription de la clé publique du certificat dans une base de données et/ou éventuellement l'identificateur de produit sous forme non cryptée au moins partiellement sur le produit identifié par l'identificateur de produit, son emballage et/ou une notice intégrée et/ou une étiquette à attacher ou similaire, de manière reconnaissable à cet effet.

10. Système de garantie de produits selon la revendication précédente,
**caractérisé en ce que**
l'on applique l'identificateur de produit crypté et éventuellement la clé publique du certificat et/ou une référence à l'inscription de la clé publique du certificat dans une base de données et/ou éventuellement l'identificateur de produit sous forme non cryptée en suites de chiffres, sous l'aspect de code à barres ou code-barres, de bande magnétique et/ou de micropuce ou de timbre RFID (étiquette RFID).

11. Système de garantie de produits selon l'une quelconque des revendications précédentes,
**caractérisé en ce que**
l'identificateur de produit contient au moins un numéro de série pour authentifier le produit de manière univoque.

12. Système de garantie de produits selon l'une quelconque des revendications précédentes,
**caractérisé en ce que**
l'identificateur de produit contient au moins un des composants suivants et/ou au moins une référence à au moins un de ces composants, ces composants ne devant pas nécessairement être mémorisés dans le serveur d'enregistrement :
des informations sur le fabricant, le vendeur ou le distributeur, ou
des informations (identification de produit) sur le produit, par exemple le type de produit, le lieu de fabrication, la date de fabrication, la date de production, la charge de production, des indications, des directives d'utilisation, des avertissements, la date de péremption ou similaires, ou une référence à une inscription correspondante avec des informations de ce genre dans une base de données.

13. Système de garantie de produits selon l'une quelconque des revendications précédentes,
**caractérisé par**
un dispositif de communication (3, 13a, 13b) pour assurer la communication de tiers avec le serveur d'enregistrement (2).

14. Système de garantie de produits selon la revendication précédente,
**caractérisé en ce que**
le dispositif de communication est une liaison téléphonique (13a, 13b) ou un réseau électronique, en particulier l'Internet.

15. Système de garantie de produits selon l'une quelconque des revendications précédentes,
**caractérisé par**
un sceau numérique pour chaque identificateur de produit, que l'on peut affecter ou qui est affecté à l'identificateur de produit respectif de manière biunivoque.

16. Système de garantit de produits selon l'une quelconque des revendications 1 à 14,
**caractérisé par**
au moins deux sceaux numériques pour chaque identificateur de produit, qui peuvent être affectés ou qui sont affectés à l'identificateur de produit respectif de manière univoque,
les au moins deux sceaux numériques étant agencés respectivement, en totalité ou en partie, sur des éléments différents ou identiques, lesquels éléments sont à cet égard le produit identifié par l'identificateur de produit, ses emballages et/ou notices intégrées et/ou étiquettes à attacher.

17. Procédé d'authentification de produits et/ou de leurs fabricants, de leurs vendeurs ou de leurs distributeurs,
dans lequel, pour chaque produit, respectivement, un identificateur de produit identifiant le produit de manière univoque est mémorisé dans une base de données sur au moins un serveur d'enregistrement,
au moins un sceau numérique est affecté à chaque identificateur de produit de façon univoque,
le sceau numérique est appliqué, de manière reconnaissable à cet effet, en totalité ou en partie, éventuellement conjointement avec l'identificateur de produit, dans ou sur le produit identifié par l'identificateur de produit, de ses emballages et/ou d'une notice intégrée et/ou d'une étiquette à attacher,
la partie du sceau numérique, agencée dans et/ou sur le produit, l'emballage, la notice intégrée et/ou l'étiquette à attacher est communiquée au moins partiellement au serveur d'enregistrement lors de la livraison ou de la vente d'un produit à un destinataire, et
le serveur d'enregistrement mémorise des informations sur la livraison ou la vente sur l'identificateur de produit,
**caractérisé en ce que**
l'on n'applique qu'une section du sceau numérique sur le produit et/ou sur l'emballage,
éventuellement la partie restante du sceau numérique nécessaire pour compléter le sceau numérique est mémorisée dans le serveur d'enregistrement,
après saisie de la partie du sceau numérique appliquée sur le produit ou l'emballage, le serveur d'enregistrement complète et décrypte cette dernière pour obtenir un sceau numérique complet.

18. Procédé selon la revendication précédente,
**caractérisé en ce que**
l'on utilise comme sceau numérique une information qui peut être représentée sous une forme numérique, qui est affectée au produit en plus de l'identificateur de produit pour vérifier l'authenticité du produit et/ou de son fabricant, de son vendeur ou de son distributeur.

19. Procédé selon l'une quelconque des deux revendications précédentes,
**caractérisé en ce que**
le sceau numérique est généré en appliquant une fonction mathématique à l'identificateur de produit.

20. Procédé selon l'une quelconque des revendications 17 à 19,
**caractérisé en ce que**
l'on utilise un sceau numérique biunivoque pour chaque identificateur de produit.

21. Procédé selon l'une quelconque des revendications 17 à 20,
**caractérisé en ce que**,
lors de la livraison ou de la vente d'un produit, le destinataire ou l'acheteur communique le sceau numérique en totalité ou en partie au serveur d'enregistrement et **en ce que** le serveur d'enregistrement marque l'identificateur de produit comme vendu ou livré.

22. Procédé selon l'une quelconque des revendications 17 à 21,
**caractérisé en ce que**,
lors de la livraison ou de la vente d'un produit, le vendeur ou le fournisseur communique le sceau numérique, en totalité ou en partie, au serveur d'enregistrement et **en ce que** le serveur d'enregistrement supprime le marquage de l'identificateur de produit comme vendu ou livré.

23. Procédé selon l'une quelconque des revendications 17 à 22,
**caractérisé en ce que**,
lors de la livraison ou de la vente d'un produit, le destinataire ou l'acheteur communique au serveur d'enregistrement une identification spécifique au destinataire ou à l'acheteur et **en ce que** le serveur d'enregistrement enregistre l'identification spécifique au destinataire ou à l'acheteur avec l'identificateur de produit.

24. Procédé selon la revendication précédente,
**caractérisé en ce que**,
lors de la livraison ou de la vente d'un produit, le vendeur ou le fournisseur communique le sceau numérique, en totalité ou en partie, au serveur d'enregistrement et **en ce que** le serveur d'enregistrement efface ou marque l'identification spécifique au destinataire ou à l'acheteur.

25. Procédé selon l'une quelconque des revendications 17 à 24,
**caractérisé en ce que**,
lors de la livraison, de la réception, de la vente et/ou de l'achat d'un produit, le fournisseur, le destinataire, le vendeur et/ou l'acheteur communique(nt) au serveur d'enregistrement une identification spécifique au fournisseur, au destinataire, au vendeur et/ou à l'acheteur et **en ce que** le serveur d'enregistrement enregistre en outre celle-ci avec l'identificateur de produit ou remplace des identifications existantes correspondantes par celle-ci.

26. Procédé selon l'une quelconque des revendications 17 à 25,
**caractérisé en ce que**,
si l'identificateur de produit correspondant sur le serveur d'enregistrement est déjà marqué comme distribué ou comme vendu, le produit à examiner est reconnu comme un plagiat ou, si l'identificateur de produit sur le serveur d'enregistrement n'est pas encore marqué comme distribué ou comme vendu, celui-ci est à présent marqué de manière correspondante.

27. Procédé selon l'une quelconque des revendications 17 à 26,
**caractérisé en ce que**
l'on applique sur le produit et/ou sur l'emballage une autre indentification de produit en texte clair, par le biais de laquelle on peut identifier de manière biunivoque le produit et/ou l'emballage, éventuellement conjointement avec la partie appliquée du sceau numérique.

28. Procédé selon la revendication précédente,
**caractérisé en ce que**
l'autre identification de produit, conjointement avec la partie appliquée du sceau numérique, est saisie dans le serveur d'enregistrement, le serveur d'enregistrement identifie le produit et/ou l'emballage et complète le sceau numérique.

29. Procédé selon l'une quelconque des revendications 17 à 28,
**caractérisé en ce que**
l'authenticité du fabricant et/ou du vendeur ou du distributeur du produit est vérifiée à l'aide des données saisies dans le serveur d'enregistrement.

30. Procédé selon l'une quelconque des revendications 17 à 29,
**caractérisé en ce que**,
lors de la livraison ou de la vente d'un produit, la partie du sceau numérique appliquée sur le produit, l'emballage, la notice intégrée et/ou l'étiquette à attacher ou similaire et éventuellement l'autre identification de produit et/ou la clé publique sont communiqués au serveur d'enregistrement sur demande écrite ou téléphonique ou par un réseau de communication électronique, notamment l'Internet.

31. Procédé selon l'une quelconque des revendications 17 à 21,
**caractérisé en ce que**
l'identificateur de produit contient au moins un numéro de série de préférence consécutif pour une identification univoque du produit.

32. Procédé selon l'une quelconque des revendications 17 à 31,
**caractérisé en ce que**
l'identificateur de produit contient en outre au moins un des composants suivants ou au moins une référence à au moins un de ces composants, ces composants ne devant pas nécessairement être mémorisés dans le serveur d'enregistrement :
des informations concernant le fabricant, le vendeur ou le distributeur, ou
des informations (identification de produit) sur le produit, notamment le type de produit, le lieu de fabrication, la date de fabrication, la date de production, la charge de production, des indications, des directives d'utilisation, des avertissements, la date de péremption ou similaires, ou une référence à une inscription correspondante avec des informations de ce genre dans une base de données.

33. Procédé selon l'une quelconque des revendications 17 à 32,
**caractérisé en ce que**
l'on utilise au moins deux sceaux numériques pour chaque identificateur de produit et **en ce qu'**on les agence dans et/ou sur des éléments identiques ou différents, les éléments étant à cet effet le produit identifié par l'identificateur de produit, son emballage et/ou une notice intégrée et/ou une étiquette à attacher.

34. Procédé selon l'une quelconque des revendications 17 à 33,
**caractérisé en ce que**
le sceau numérique est généré par cryptage symétrique de l'identificateur de produit affecté avec une clé secrète ou par cryptage asymétrique de l'identificateur de produit affecté avec une clé privée ou en appliquant une fonction de hachage à l'identificateur de produit affecté pour générer un code d'identification de message (Message Authentication Code ou MAC).

35. Procédé selon la revendication précédente,
**caractérisé en ce que**
l'identificateur de produit est crypté au moyen d'une clé secrète pour la cryptographie symétrique ou d'une clé privée d'une paire de clés ou d'un certificat comportant une clé privée et une clé publique pour la cryptographie asymétrique pour obtenir un sceau numérique,
l'identificateur de produit crypté est appliqué à cet effet, de manière reconnaissable, en totalité ou en partie, éventuellement conjointement avec l'identificateur de produit non crypté et/ou une référence à l'inscription de la clé publique du certificat dans une base de données, au moins en partie sur le produit, son emballage, une notice intégrée, une étiquette cousue, un autocollant et/ou une étiquette à attacher ou similaire,
lors de la livraison ou de la vente d'un produit à un destinataire, la partie de l'identificateur de produit crypté, appliquée sur le produit, l'emballage, la notice intégrée et/ou l'étiquette à attacher, est communiquée au serveur d'enregistrement,
le serveur d'enregistrement complète éventuellement l'identificateur de produit crypté et le décrypte avec la clé privée ou la clé publique, et
le serveur d'enregistrement enregistre des informations sur la livraison ou la vente dans l'identificateur de produit.

36. Procédé selon la revendication précédente,
**caractérisé en ce que**
l'on applique sur le produit, son emballage, une notice intégrée et/ou une étiquette à attacher ou similaire, la clé publique et/ou une référence à l'inscription de la clé publique du certificat dans une base de données, en particulier dans le serveur d'enregistrement, de manière reconnaissable à cet effet, la clé publique et/ou éventuellement la référence à celle-ci est enregistrée dans le serveur d'enregistrement et/ou la clé publique est rendue accessible de n'importe quelle autre manière.

37. Procédé selon l'une quelconque des deux revendications précédentes,
**caractérisé en ce que**
la clé publique est communiquée au serveur d'enregistrement.

38. Produit, comportant les informations suivantes, appliquées de manière reconnaissable en soi sur le produit et/ou l'emballage :
une section d'un sceau numérique, qui est affecté de manière univoque à un identificateur de produit, l'identificateur de produit identifiant de manière univoque le produit,
laquelle section appliquée du sceau numérique peut être complétée éventuellement par une partie complétant la section appliquée, qui est enregistrée sur un serveur d'enregistrement.

39. Produit selon la revendication précédente,
**caractérisé en ce que**
le sceau numérique peut être généré ou est généré en appliquant une fonction mathématique à l'identificateur de produit affecté.

40. Produit selon la revendication précédente,
**caractérisé en ce que**
le sceau numérique peut être généré ou est généré par cryptage symétrique de l'identificateur de produit affecté avec une clé secrète ou par cryptage asymétrique de l'identificateur de produit affecté avec une clé privée ou en appliquant une fonction de hachage à l'identificateur de produit affecté.

41. Produit selon l'une quelconque des revendications 38 à 40,
**caractérisé en ce que**
l'on applique, de manière reconnaissable, non cryptée, un autre identificateur de produit sur le produit lui-même.

42. Produit selon l'une quelconque des deux revendications précédentes,
**caractérisé en ce que**
l'on applique, de manière reconnaissable, la clé publique et/ou une référence à l'inscription de la clé publique dans une base de données et/ou l'identificateur de produit non crypté sur le produit lui-même.

43. Produit selon l'une quelconque des trois revendications précédentes,
**caractérisé en ce que**
l'identificateur de produit crypté, l'autre identificateur de produit, la clé publique du certificat et/ou l'identificateur de produit non crypté sont appliqués sous la forme de suites de chiffres, en bandes magnétiques, en micropuce ou en timbre RFID (étiquette RFID), comme code à barres et/ou comme code-barres ou similaires.

44. Produit selon l'une quelconque des revendications 38 à 43,
**caractérisé en ce que**
l'identificateur de produit contient un numéro de série de préférence consécutif pour une identification univoque du produit.

45. Produit selon l'une quelconque des revendications 38 à 44,
**caractérisé en ce que**
l'identificateur de produit contient en outre un des composants suivants ou une référence à ces composants :
des informations relatives au fabricant, au vendeur ou au distributeur, ou
des informations (identification de produit) sur le produit, notamment le type de produit, le lieu de fabrication, la date de fabrication, la date de production, la charge de production, des indications, des directives d'utilisation, des avertissements, la date de péremption ou similaire,
ou une référence à une inscription correspondante avec des informations de ce genre dans une base de données.

46. Emballage de produit, comportant les informations suivantes disposées de manière reconnaissable en soi sur l'emballage de produit :
une section d'un sceau numérique, qui est affectée de manière univoque à un identificateur de produit, qui identifie le produit de manière univoque,
la section appliquée du sceau numérique pouvant éventuellement être complétée par une partie complétant la section appliquée, qui est enregistrée sur un serveur d'enregistrement.

47. Emballage de produit selon la revendication précédente,
**caractérisé en ce que**
le sceau numérique peut être généré ou est généré en appliquant une fonction mathématique à l'identificateur de produit affecté.

48. Emballage de produit selon la revendication précédente,
**caractérisé en ce que**
le sceau numérique peut être généré ou est généré par cryptage symétrique de l'identificateur de produit affecté avec une clé secrète ou par cryptage asymétrique de l'identificateur de produit affecté avec une clé privée ou en appliquant une fonction de hachage à l'identificateur de produit affecté.

49. Emballage de produit selon l'une quelconque des revendications 46 à 48,
**caractérisé en ce que**
l'on applique, de manière reconnaissable, non cryptée, un autre identificateur de produit sur l'emballage du produit.

50. Emballage de produit selon l'une quelconque des deux revendications précédentes,
**caractérisé en ce que**
l'on applique de manière reconnaissable sur celui-ci la clé publique du certificat et/ou l'identificateur de produit non crypté.

51. Emballage de produit selon l'une quelconque des trois revendications précédentes,
**caractérisé en ce que**
l'identificateur de produit crypté, l'autre identificateur, l'identificateur de produit non crypté et/ou la clé publique du certificat et/ou une référence à l'inscription de la clé publique du certificat dans une base de données sont appliqués sous la forme de suites de chiffres en bandes magnétiques, en micropuce ou en timbre RFID (étiquette RFID), sous l'aspect de code à barres et/ou code-barres.

52. Emballage de produit selon l'une quelconque des revendications 46 à 51,
**caractérisé en ce que**
l'identificateur de produit contient au moins un numéro de série de préférence consécutif pour l'identification univoque du produit.

53. Emballage de produit selon l'une quelconque des revendications 46 à 52,
**caractérisé en ce que**
l'identificateur de produit contient en outre au moins un des composants suivants ou au moins une référence à au moins un de ces composants :
des informations relatives au fabricant, au vendeur ou au distributeur, ou
des informations (identification de produit) sur le produit, notamment le type de produit, le lieu de fabrication, la date de fabrication, la date de production, la charge de production, des indications, des directives d'utilisation, des avertissements, la date de péremption ou similaire, ou au moins une référence à une inscription correspondante avec des informations de ce genre dans une base de données.

54. Utilisation d'un système de garantie de produits, d'un procédé, d'un produit ou d'un emballage selon l'une quelconque des revendications précédentes dans la commercialisation d'un médicament, d'un vêtement, d'un produit alimentaire, d'aliments pour enfants ou pour bébés, de produits à base de viande, de pièces de rechange, de pièces de sous-traitance, de produits semi-finis, de pièces finies, en particulier dans l'industrie automobile et dans l'industrie aéronautique et similaire.
